# EUROPÄISCHE PATENTSCHRIFT

(11) **EP 4 251 381 B1**
(45) Veröffentlichungstag und Bekanntmachung des Hinweises auf die Patenterteilung: **05.11.2025**
(21) Anmeldenummer: 21815937.4
(22) Anmeldetag: 15.11.2021
(51) Int. Cl.: B25J 19/02

(54) **MEHRGLIEDRIGE AKTUIERTE KINEMATIK**
MULTI-MEMBERED ACTUATED KINEMATIC SYSTEM
MÉCANISME CINÉMATIQUE ACTIONNÉ, À PLUSIEURS ÉLÉMENTS

(30) Priorität: 26.11.2020 DE 102020131338
(43) Veröffentlichungstag der Anmeldung: 04.10.2023
(73) Patentinhaber: Agile Robots SE, 81369 München (DE)
(72) Erfinder: ANGERSTEIN, Nico, 30519 Hannover (DE); KREMSIER, Christoph, 30161 Hannover (DE); LAZA, Patrick, 30459 Hannover (DE); LUCHER, Eugen, 31698 Lindhorst (DE); SCHOOB, Andreas, 30161 Hannover (DE)
(74) Vertreter: Keilitz & Partner Patentanwälte PartGmbB
(86) Internationale Anmeldenummer: PCT/EP2021/081722
(87) Internationale Veröffentlichungsnummer: WO 2022/112044

(56) Entgegenhaltungen:
- EP-A1- 3 476 549
- DE-A1- 102009 056 578
- US-A1- 2020 282 553

## Beschreibung

Die vorliegende Erfindung betrifft eine mehrgliedrige aktuierte Kinematik gemäß dem Oberbegriff des Patentanspruchs 1.

Auf vielen technischen sowie auch auf sonstigen Gebieten werden seit Längerem mehrgliedrige aktuierte Kinematiken verwendet, um dem Menschen mechanische Arbeiten abzunehmen bzw. ihm diese zumindest zu erleichtern. Je nach Anwendung und Ausgestaltung können derartige mehrgliedrige aktuierte Kinematiken als Automatisierungsanlage oder als Roboter bezeichnet werden. In jedem Fall weist eine mehrgliedrige aktuierte Kinematik mehrere Antriebe und Glieder, welche auch als Achsen bezeichnet werden können, auf, wobei ein Antrieb und ein Glied zusammen auch als Antriebseinheit bezeichnet werden können. Derartige Antriebseinheiten können zu mehrgliedrigen bzw. mehrachsigen Antriebssystemen bzw. zu mehrgliedrigen aktuierten Kinematiken kombiniert werden, welche mehrdimensionale Bewegungen und entsprechend komplexere Bewegungsabläufe ausführen bzw. Trajektorien abfahren können. Derartige Antriebssysteme können auch als mechatronische Systeme bezeichnet werden. Mehrgliedrige aktuierte Kinematiken als Roboter sind in der Industrie insbesondere als Knickarmroboter weit verbreitet, weshalb Knickarmroboter auch als Industrieroboter bezeichnet werden können. Ein Knickarmroboter ist üblicherweise eine 6-achsige mehrgliedrige aktuierte Kinematik mit einem kugelförmigen bzw. halbkugelförmigen Arbeitsraum um sich herum, weshalb Knickarmroboter sehr flexibel eingesetzt werden können. Ein Knickarmroboter erstreckt sich dabei üblicherweise von einer feststehenden Basis über sechs Glieder bzw. über sechs Antriebseinheiten als serielle kinematische Kette bis hin zu einem Endeffektor, welcher mit der Umwelt zum Beispiel als Greifer interagieren kann, sodass die Basis, die sechs Antriebseinheiten und der Endeffektor bzw. eine Endeffektoreinheit die Elemente bzw. Glieder der seriellen kinematischen Kette bilden. Die Basis des Knickarmroboters kann dabei feststehend bzw. ortsfest oder auch mobil beweglich bzw. verfahrbar sein, um die Einsatzmöglichkeiten des Knickarmroboters zu erhöhen. Üblicherweise kann das Werkzeug, welches als Endeffektor dient, je nach Anwendung gewechselt werden. Ferner kann die Programmierung des Knickarmroboters an die Anwendung angepasst werden, ohne den Knickarmroboter selbst verändern zu müssen, was ihn sehr anpassungsfähig machen kann. Es sind jedoch auch Knickarmroboter mit weniger als sechs Achsen bekannt, welche entsprechend weniger Posen im Arbeitsraum einnehmen können, dafür jedoch einfacher und kostengünstiger z.B. dadurch realisiert werden können, dass weniger Antriebe verwendet, betrieben und gesteuert bzw. geregelt werden müssen. Ebenso können Knickarmroboter mehr als sechs Achsen aufweisen, um die Geschicklichkeit bzw. die Bewegungsmöglichkeiten zu erhöhen.

In den letzten Jahren haben sich die Roboter und insbesondere die Knickarmroboter dahin entwickelt, z.B. bei der Montage, bei der Programmierung oder beim Teachen unmittelbar mit Personen zusammenzuarbeiten. Hieraus hat sich der Begriff des kollaborativen Roboters oder kurz Cobot (aus dem Englischen: collaborative robot) entwickelt. Es kann sowohl auf mechanische Abgrenzungen wie z.B. Gitterwände verzichtet werden, welche bisher üblich waren, um den Arbeitsraum des Roboters von der Umgebung zu trennen, in der sich Personen sicher aufhalten können, als auch auf Lichtschranken, Lichtgitter und dergleichen, welche zumindest ein Betreten des Arbeitsraums des Roboters durch eine Person erkennen können. Vielmehr können sich Personen frei gegenüber dem Roboter bewegen.

Die Glieder bzw. die Antriebseinheiten sind üblicherweise bei mehrgliedrigen aktuierten Kinematiken und insbesondere bei Robotern bzw. Knickarmrobotern derart ausgebildet, dass jede Antriebseinheit an ihrem einen Ende mit der Basis bzw. mit einer vorangehenden Antriebseinheit der seriellen kinematischen Kette und am gegenüberliegenden Ende mit einer nachfolgenden Antriebseinheit bzw. mit dem Endeffektor bzw. mit einer Endeffektoreinheit verbunden werden kann. Der Antrieb der Antriebseinheit kann jeweils eine Relativbewegung zu einem weiteren Element der seriellen kinematischen Kette durchführen, sodass sich ein Teilbereich der Antriebseinheit relativ zur übrigen Antriebseinheit bewegen kann. Der Antrieb kann üblicherweise einen elektrischen Motor und insbesondere einen rotatorisch wirkenden elektrischen Motor in Kombination mit einem Getriebe aufweisen, um derartige Relativbewegungen bewirken zu können. Je nach Anordnung des Antriebs der Antriebseinheit kann der eine Teilbereich der Antriebseinheit als abtriebsseitig und der andere Teilbereich der Antriebseinheit als antriebsseitig bezeichnet werden. Die Relativbewegung kann je nach Ausgestaltung der mehrgliedrigen aktuierten Kinematiken translatorisch oder rotatorisch sein, wobei bei Automatisierungsanlagen üblicherweise sowohl translatorische als auch rotatorische Antriebseinheiten verwendet werden, bei Robotern und insbesondere bei Knickarmrobotern üblicherweise jedoch lediglich rotatorische Antriebseinheiten.

In jedem Fall kann der Endeffektor bzw. die Endeffektoreinheit gegenüber der Basis der mehrgliedrigen aktuierten Kinematik gezielt bewegt und im Raum positioniert sowie orientiert werden. Unter Position einer Antriebseinheit bzw. des Endeffektors bzw. der Endeffektoreinheit wird der Ort innerhalb eines kartesischen Koordinatensystems verstanden, an dem sich die Antriebseinheit bzw. der Endeffektor bzw. die Endeffektoreinheit in einem geometrischen Raum befindet. Unter Positionierung einer Antriebseinheit bzw. des Endeffektors bzw. der Endeffektoreinheit wird das Einnehmen eines konkreten räumlichen Ortes verstanden. Unter Orientierung einer Antriebseinheit bzw. des Endeffektors bzw. der Endeffektoreinheit wird die Ausrichtung der Antriebseinheit bzw. des Endeffektors bzw. der Endeffektoreinheit zu den Achsen eines kartesischen Koordinatensystems verstanden. Unter der Einnahme einer Orientierung einer Antriebseinheit bzw. des Endeffektors bzw. der Endeffektoreinheit wird die Veränderung der aktuellen Orientierung der Antriebseinheit bzw. des Endeffektors bzw. der Endeffektoreinheit durch Drehung um die entsprechenden Achsen eines kartesischen Koordinatensystems in eine gewünschte Orientierung verstanden. Position und Orientierung können gemeinsam als Pose, als Lage oder als Konfiguration bezeichnet werden. Eine Trajektorie einer Antriebseinheit bzw. des Endeffektors bzw. der Endeffektoreinheit ist eine Bewegung der Antriebseinheit bzw. des Endeffektors bzw. der Endeffektoreinheit im Raum entlang eines Weges unter Berücksichtigung dessen zeitlichen Ablaufs. Eine Trajektorie kann auch als Bahnkurve bezeichnet werden. Der Weg ohne zeitlichen Bezug kann auch als Pfad bezeichnet werden.

Insbesondere bei Robotern und ganz besonders bei Knickarmrobotern ist es dabei bekannt, seitens der Basis und pro Antriebseinheit eine Steuerungseinheit vorzusehen, welche auch als Regelungseinheit bezeichnet werden kann. Diese Steuerungseinheit kann zum Beispiel antriebsseitig angeordnet sein und wenigstens einen Positionssensor der Antriebsseite abfragen, um die Positionierung des abtriebsseitigen Teilbereichs der Antriebseinheit gegenüber dem antriebsseitigen Teilbereich der Antriebseinheit bestimmen zu können. In Abhängigkeit der sensorisch erfassten Positionierung kann der Antrieb der Antriebseinheit von der Steuerungseinheit betrieben und insbesondere auf eine vorbestimmte Position bzw. Winkellage geregelt werden. Seitens der Steuerungseinheit können auch weitere Sensoren wie zum Beispiel Dehnungsmessstreifen in der Antriebseinheit auszuwerten sein. Dies kann vergleichbar für die Basis der mehrgliedrigen aktuierten Kinematik gelten. Die Steuerungseinheiten der Antriebseinheiten bzw. die Steuerungseinheit der Basis können daher auch als dezentrale Steuerungseinheiten bezeichnet werden.

Um dabei alle Antriebe der Antriebseinheiten der mehrgliedrigen aktuierten Kinematik untereinander koordinieren und hierdurch den Endeffektor bzw. die Endeffektoreinheit die gewünschte Pose gegenüber der Basis einnehmen zu lassen, müssen die Steuerungseinheiten der Antriebseinheiten koordiniert werden. Dies erfolgt üblicherweise seitens einer übergeordneten zentralen Steuerungseinheit der mehrgliedrigen aktuierten Kinematik, welche datenübertragend mit allen Steuerungseinheiten der Antriebseinheiten und gegebenenfalls der Steuerungseinheit der Basis verbunden ist. Dies erfolgt üblicherweise mittels eines sogenannten Feldbusses, über welchen die zentrale Steuerungseinheit mit allen dezentralen Steuerungseinheiten bidirektionalen kommunizieren kann, um sowohl Informationen als auch Anweisungen als Daten von der übergeordneten zentralen Steuerungseinheit an die einzelnen dezentralen Steuerungseinheiten der Antriebseinheiten senden und wenigstens Informationen als Daten von dort erhalten zu können. Als derartige Feldbusse werden zum Beispiel Modbus und EtherCAT als seriellen Feldbusse verwendet.

Bei Robotern und insbesondere bei Knickarmrobotern ist es bekannt, im Bereich des Endeffektors bzw. an der Endeffektoreinheit zusätzliche Geräte zu betreiben, um die Anwendungsmöglichkeiten des Roboters zu erhöhen bzw. um neuer Anwendungsfelder zu erschließen. Insbesondere können Kameras dazu verwendet werden, den Bereich vor dem Endeffektor optisch zu erfassen und hierdurch die Wahrnehmung der Umwelt durch den Roboter zu ermöglichen. Eine derartige Kamera kann als Beispiel einer Datenverarbeitungseinheit angesehen werden, da die Kamera zum einen seitens des Roboters betrieben bzw. gesteuert werden und zum anderen optische Informationen als optische Daten, d. h. als Daten, welche optische Informationen repräsentieren, erzeugen und übertragen kann. Eine derartige Kamera und dergleichen kann an einem separaten Bauteil angeordnet sein, welches zwischen dem letzten Glied bzw. der letzten Antriebseinheit und dem Endeffektor, insbesondere feststehend mit dem Endeffektor, angeordnet und als Verbindungselement bzw. als Medienflansch bezeichnet werden kann. Das Verbindungselement bzw. der Medienflansch und der Endeffektor können gemeinsam auch als Endeffektoreinheit bezeichnet werden.

Zum Betrieb einer Datenverarbeitungseinheit zum Beispiel in Form der zuvor beschriebenen Kamera im Bereich des Endeffektors bzw. an der Endeffektoreinheit ist somit zum einen erforderlich, die Kamera elektrisch zu versorgen, was durch die Anbindung der Kamera an die elektrische Versorgung des Roboters erfolgen kann. Zum anderen ist eine bidirektionale Kommunikation zwischen dem Roboter und der Kamera erforderlich, um Steuerungsdaten zum Beispiel von der übergeordneten zentralen Steuerungseinheit zur Kamera hin und die erfassten optischen Bilddaten als optische Daten, d.h. als Daten, welche optische Informationen repräsentieren, von der Kamera weg zur übergeordneten zentralen Steuerungseinheit übertragen zu können.

Hierzu ist es bisher üblich, ein zusätzliches Daten- und Versorgungskabel von der Kamera entlang der seriellen kinematischen Kette der Antriebseinheiten des Roboters zu dessen übergeordneten zentralen Steuerungseinheit zu führen und dort mit der übergeordneten zentralen Steuerungseinheit sowohl signalübertragend als auch spannungsübertragend zu verbinden. Hierdurch kann eine direkte elektrische Versorgung der Kamera seitens der zentralen Steuerungseinheit erfolgen. Ferner können sowohl die Steuerungsdaten bzw. Anweisungen sowie die Bilddaten bzw. optische Daten direkt zwischen der übergeordneten zentrale Steuerungseinheit und der Kamera der Endeffektoreinheit ausgetauscht werden.

Nachteilig ist hierbei jedoch, dass üblicherweise ein derartiges zusätzliches Daten- und Versorgungskabel als externes Kabel außen an den Antriebseinheiten des Roboters entlang geführt und von außen an den Gehäusen der Antriebseinheiten befestigt wird, was üblicherweise von einer Person händisch erfolgt. Dies stellt einen zusätzlichen Aufwand bei der Herstellung bzw. bei der Montage des Roboters dar.

Auch muss das externe Kabel zwischen den antriebsseitigen Teilbereichen und abtriebsseitigen Teilbereichen der einzelnen Antriebseinheiten ausreichend lose bzw. in Schlaufen verlegt werden, damit das externe Kabel die Relativbewegungen der Antriebseinheiten zueinander nicht behindert bzw. hierdurch nicht abgerissen wird. Hierdurch kann jedoch ein derartiges externes Kabel eine Gefahr bei der Verwendung des Roboters darstellen, da sich Gegenstände oder sogar Personen in den Schlaufen des externen Kabels verfangen können. Darüber hinaus kann auch bei großzügiger Ausbildung der Schlaufen des externen Kabels die Bewegungsfreiheit und damit der Arbeitsraum des Roboters eingeschränkt werden. Ferner kann das externe Kabel, insbesondere aufgrund seiner Schlaufen, vom Benutzer als optisch störend empfunden werden.

Alternativ ist es daher bekannt, ein zusätzliches Daten- und Versorgungskabel zum Beispiel einer Kamera durch die Antriebseinheiten des Roboters hindurch zu verlegen, um ein externes Kabel wie zuvor beschrieben zu vermeiden. Da die Antriebseinheiten derartiger Roboter und insbesondere derartiger Knickarmroboter zur Umsetzung rotatorischer Relativbewegungen wie zuvor beschrieben üblicherweise Antriebe mit elektrischen Motoren und Hohlwellengetrieben aufweisen, wird üblicherweise jedoch bereits das Feldbus-Kabel als Datenkabel sowie das elektrische Versorgungskabel der Antriebseinheiten durch die Hohlwellen der Antriebe geführt, sodass durch die Hohlwellen der Antriebe hindurch gar kein oder höchstens ein sehr geringer Bauraum für ein weiteres Daten- und Versorgungskabel der Kamera oder einer sonstigen Datenverarbeitungseinheit des Endeffektors bzw. der Endeffektoreinheit zur Verfügung steht.

Falls überhaupt ein ausreichender Bauraum für ein weiteres Daten- und Versorgungskabel der Kamera zur Verfügung steht, wird durch die entsprechend hoher Steifigkeit des Kabelstrangs aller Kabel zusammen die Bewegungen der Antriebe erschwert und verlangsamt. Auch können die Kabel nun verstärkt aneinander und bzw. oder an den Innenseiten der Hohlwellen reiben, wodurch es zu einem Abrieb der Kabel oder sogar zu Kabelbrüchen bzw. zu einer verringerten Lebensdauer der Kabel kommen kann. Je mehr Kabel somit durch eine Hohlwelle geführt werden, umso größer bzw. stärker können diese Effekte auftreten.

Ferner können sich die Kabel untereinander aufgrund von EMV-Problemen (Elektromagnetische Verträglichkeit) gegenseitig in der Signalübertragung stören. Dies gilt insbesondere für die elektrischen Versorgungskabel, welche auf die Signalübertragung der Datenkabel der Antriebseinheiten und bzw. oder der Kamera störend wirken können.

EP 3 476 549 A1 offenbart einen modularen Roboter, dessen Module über Kommunikationsleitungen miteinander verbunden sind.

US 2020 / 282 553 A1 offenbart einen Roboter mit Endeffektor.

DE 10 2009 056 578 A1 offenbart einen Roboter mit Datenbus.

Eine Aufgabe der vorliegenden Erfindung ist es, eine mehrgliedrige aktuierte Kinematik, nämlich einen Roboter, insbesondere einen Knickarmroboter, der eingangs beschriebenen Art bereit zu stellen, sodass die Datenübertragung über die Antriebseinheiten hinweg einfacher als bisher bekannt ausgeführt werden kann. Insbesondere soll die bidirektionale Übertragung von Daten zwischen einer übergeordneten zentralen Steuerungseinheit der mehrgliedrigen aktuierten Kinematik und einer Datenverarbeitungseinheit einer Endeffektoreinheit der mehrgliedrigen aktuierten Kinematik vereinfacht werden. Insbesondere soll zusätzlich oder alternativ die elektrische Versorgung einer Bildverarbeitungseinheit der Endeffektoreinheit seitens der mehrgliedrigen aktuierten Kinematik vereinfacht und bzw. oder verbessert werden. Zumindest soll eine Alternative zu bekannten derartigen mehrgliedrigen aktuierten Kinematiken bereitgestellt werden.

Die Aufgabe wird erfindungsgemäß durch eine mehrgliedrige aktuierte Kinematik mit den Merkmalen des Patentanspruchs 1 gelöst. Vorteilhafte Weiterbildungen sind in den Unteransprüchen beschrieben.

Somit betrifft die vorliegende Erfindung eine mehrgliedrige aktuierte Kinematik mit einer Mehrzahl von Antriebseinheiten, welche als serielle kinematische Kette miteinander verbunden sind. Eine derartige serielle kinematische Kette kann aus wenigstens zwei Antriebseinheiten bestehen, welche miteinander verbunden sind und gegenüber einander mittels eines Antriebs einer der beiden Antriebseinheiten eine Bewegung ausführen können. Eine derartige Bewegung kann vorzugsweise rotatorisch sein. Es können auch mehr als zwei Antriebseinheiten verwendet werden. Vorzugsweise können wenigstens sechs Antriebseinheiten und ganz besonders bevorzugt genau sechs Antriebseinheiten als serielle kinematische Kette zu einer mehrgliedrigen aktuierten Kinematik zusammengefügt werden. Eine derartige mehrgliedrige aktuierte Kinematik kann insbesondere als Roboter und ganz besonders als Industrieroboter bzw. als Knickarmroboter umgesetzt werden. Derartige mehrgliedrige aktuierte Kinematiken können zum Beispiel in der Industrie eingesetzt werden, um insbesondere Aufgaben in der Montage, in der Fertigung, in der Logistik sowie beim Verpacken und Kommissionieren von Waren zu übernehmen.

In jedem Fall kann die eine Antriebseinheit relativ zu der anderen Antriebseinheit feststehend angeordnet werden, was zum Beispiel auf einem Untergrund wie zum Beispiel einem Boden, einer Wand, einer Decke oder dergleichen erfolgen kann. Hierzu kann diese Antriebseinheit beweglich gegenüber einer

Basis verbunden sein, welche feststehend an dem Untergrund angeordnet sein kann. In jedem Fall kann der Untergrund jedoch auch mobil ausgebildet sein, zum Beispiel in Form eines Fahrzeugs, auf dem bzw. an dem diese Antriebseinheit oder die Basis feststehend angeordnet sein kann.

Die Bewegungen der Antriebseinheiten können mittels jeweils eines Antriebs umgesetzt werden, wie eingangs beschrieben. Hierzu können insbesondere rotatorisch wirkende Antriebe verwendet werden, wie bereits zuvor erwähnt. Als Antriebskraft können auch ein hydraulischer oder ein pneumatischer Druck verwendet werden, wobei elektrische Energie zur Erzeugung der Antriebskraft zu bevorzugen sein kann. Die Bewegung kann direkt von einem entsprechenden Motor oder indirekt über ein Getriebe umgesetzt werden. Als Motoren können insbesondere Elektromotoren und als Getriebe insbesondere Hohlwellengetriebe verwendet werden. Die Stellung des antriebsseitigen und des abtriebsseitigen Teils des jeweiligen Antriebs kann über einen Positionssensor wie zum Beispiel über einen Winkelgeber bei rotatorischen Antrieben erfasst werden, sodass eine relative Stellung des antriebsseitigen und des abtriebsseitigen Teils des jeweiligen Antriebs sensorisch erfasst werden kann. Gegebenenfalls kann zusätzlich auch ein Drehmomentensensor vorhanden sein.

Die Antriebseinheiten weisen jeweils eine Steuerungseinheit auf, welche ausgebildet sind, wenigstens einen Antrieb der Antriebseinheit zur Durchführung der Bewegung der Antriebseinheit zu betreiben. Eine derartige Steuerungseinheit kann zum Beispiel als Platine mit entsprechenden elektronischen Bauelementen ausgebildet sein, welche innerhalb eines Gehäuses der Antriebseinheit, vorzugsweise antriebsseitig, feststehend angeordnet sein kann. Derartige Steuerungseinheiten pro Antriebseinheit können auch als dezentrale Steuerungseinheiten angesehen werden.

Die Steuerungseinheiten der Antriebseinheiten sind untereinander durch eine erste Datenleitung signalübertragend verbunden und ausgebildet, über die erste Datenleitung wenigstens Daten zum Betreiben des Antriebs zu erhalten. Über die erste Datenleitung können die Steuerungseinheiten der Antriebseinheiten signalübertragend mit wenigstens einer übergeordneten zentralen Steuerungseinheit verbunden sein. Eine derartige Signalübertragung kann vorzugsweise über einen Feldbus wie zum Beispiel über einen seriellen EthernetCAT-Bus erfolgen, welcher die Steuerungseinheiten aller Antriebseinheiten untereinander und vorzugsweise ferner mit der übergeordneten zentralen Steuerungseinheit signalübertragend verbindet.

Seitens der Steuerungseinheiten der Antriebseinheiten kann jeweils ein Betreiben der elektrischen bzw. elektronischen Funktionen der jeweiligen Antriebseinheit erfolgen. Insbesondere kann seitens der Steuerungseinheiten der jeweilige Antrieb gesteuert bzw. positioniert werden. Vorzugsweise kann ferner ein Betreiben bzw. ein Auslesen eines Positionssensors der jeweiligen Antriebseinheit erfolgen. Entsprechend können von der Steuerungseinheit der jeweiligen Antriebseinheit Daten in Form von Anweisungen, Befehlen bzw. Steuerungsdaten erhalten und umgesetzt werden. In der umgekehrten Richtung können von der Steuerungseinheit der jeweiligen Antriebseinheit Daten in Form von Informationen bzw. Sensordaten zum Beispiel des Positionssensors der Antriebseinheit ausgesendet und zum Beispiel der übergeordneten zentralen Steuerungseinheit zur Verfügung gestellt werden. Die übergeordnete zentrale Steuerungseinheit kann aus derartigen Positionsinformationen aller Antriebseinheiten mithilfe eines kinematischen Modells der mehrgliedrigen aktuierten Kinematik dessen Pose bestimmen und entsprechende Anweisungen über die erste Datenleitung an die Steuerungseinheiten der Antriebseinheiten ausgeben, um die Pose zu verändern.

Die erfindungsgemäße mehrgliedrige aktuierte Kinematik ist dadurch gekennzeichnet, dass die Steuerungseinheiten der Antriebseinheiten ferner untereinander durch eine zweite Datenleitung signalübertragend verbunden und ausgebildet sind, die Daten der zweiten Datenleitung weiterzuleiten.

Mit anderen Worten sind die Steuerungseinheiten der Antriebseinheiten der erfindungsgemäßen mehrgliedrigen aktuierten Kinematik durch zwei unterschiedlichen Datenleitungen signalübertragend miteinander bzw. untereinander verbunden, wobei die Datenleitungen jeweils dazu ausgebildet sind, Signale zu übertragen, welche Daten repräsentieren. Die Datenleitungen können hierzu eine entsprechende Anzahl von Adern bzw. Leitern aufweisen, welche gemeinsam jeweils die Datenleitung bilden, welche auch als Kabel bezeichnet werden kann. Die Datenleitungen können hierzu auch eine Mehrzahl hintereinander angeordneter bzw. geschalteter einzelner Leitungen bzw. Kabel aufweisen. Die Signalübertragung kann elektrisch oder auch optisch erfolgen, wobei elektrisch aufgrund der Einfachheit zu bevorzugen sein kann.

Somit ist die erste Datenleitung derart mit den Steuerungseinheiten der Antriebseinheiten signalübertragend verbunden, dass Daten insbesondere in Form von Steuerungsdaten, Anweisungen bzw. Befehlen von den Steuerungseinheiten der Antriebseinheiten wenigstens empfangen werden können. Gegebenenfalls können diese Daten von der jeweiligen Steuerungseinheit auch weitergeleitet werden, falls diese Daten nicht an die jeweilige Steuerungseinheit gerichtet sind, wie es zum Beispiel bei einem BusSystem der Fall sein kann. Zusätzlich oder alternativ können Daten in Form von Informationen bzw. Sensordaten von der jeweiligen Steuerungseinheit über die erste Datenleitung ausgesendet bzw. weitergeleitet werden. In jedem Fall sind die Steuerungseinheiten der Antriebseinheiten dazu ausgebildet, die Daten, welche sie über die erste Datenleitung erhalten, auszulesen und wenigstens dahingehend zu prüfen, ob diese eingehenden Daten für die jeweilige Steuerungseinheit bestimmt sind oder nicht. In Abhängigkeit dieser Betrachtung werden die eingehenden Daten dann von der jeweiligen Steuerungseinheit für sich selbst weiterverarbeitet oder über die erste Datenleitung weitergeleitet.

Dies kann vorzugsweise dadurch umgesetzt werden, dass die Steuerungseinheiten der Antriebseinheiten jeweils einen ersten Datenleitungseingangsanschluss aufweisen, welcher signalübertragend mit einem Kabel der ersten Datenleitung verbunden ist, und dass die Steuerungseinheiten der Antriebseinheiten jeweils einen ersten Datenleitungsausgangsanschluss aufweisen, welcher signalübertragend mit einem weiteren Kabel der ersten Datenleitung verbunden ist, wobei die Steuerungseinheiten der Antriebseinheiten jeweils ausgebildet sind, wenigstens Daten zum Betreiben ihres Antriebs über die erste Datenleitung zu erhalten und Daten zum Betreiben eines Antriebs einer anderen Antriebseinheit über die erste Datenleitung weiterzuleiten.

Im Unterschied hierzu ist die zweite Datenleitung derart mit den Steuerungseinheiten der Antriebseinheiten signalübertragend verbunden, dass Daten insbesondere in Form von Sensordaten bzw. Informationen dort eben gerade nicht die elektronischen Bauelemente der Steuerungseinheit erreichen und dort verarbeitet bzw. genutzt werden können. Vielmehr werden Daten über die zweite Datenleitung von der jeweiligen Steuerungseinheit lediglich in der Form empfangen bzw. angenommen, dass diese Daten direkt über die zweite Datenleitung inhaltlich unverändert weitergegeben werden. Hinsichtlich der Daten der zweiten Datenleitung dienen die Steuerungseinheiten der Antriebseinheiten somit lediglich zur physischen bzw. physikalischen Verbindung bzw. zur Ankopplung der zweiten Datenleitung, was vorzugsweise dadurch umgesetzt werden kann, dass ein Kabel der zweiten Datenleitung an der jeweiligen Steuerungseinheit angeschlossen ist und endet und ein weiteres Kabel der zweiten Datenleitung an dieser Steuerungseinheit angeschlossen ist und beginnt.

Dies kann vorzugsweise zusätzlich oder alternativ dadurch umgesetzt werden, dass die Steuerungseinheiten der Antriebseinheiten jeweils einen zweiten Datenleitungseingangsanschluss aufweisen, welcher signalübertragend mit einem Kabel der zweiten Datenleitung verbunden ist, und dass die Steuerungseinheiten der Antriebseinheiten jeweils einen zweiten Datenleitungsausgangsanschluss aufweisen, welcher signalübertragend mit einem weiteren Kabel der zweiten Datenleitung verbunden ist, wobei die Steuerungseinheiten der Antriebseinheiten jeweils ausgebildet sind, alle Daten unbeachtet über die zweite Datenleitung weiterzuleiten.

Der vorliegenden Erfindung liegt dabei die Erkenntnis zugrunde, dass bisher derartige erste Datenleitungen bei mehrgliedrigen aktuierten Kinematiken wie zum Beispiel bei Knickarmrobotern, wie eingangs beschrieben, dazu verwendet werden, die dezentralen Steuerungseinheit der Antriebseinheiten mit einer übergeordneten zentralen Steuerungseinheit signalübertragend zu verbinden und hierdurch die entsprechenden Sensordaten sowie Anweisungen als Daten in beide Richtungen zu übertragen, welche zum Betrieb bzw. zur Positionierung der mehrgliedrigen aktuierten Kinematik an sich erforderlich sind. Hierzu kann es auch gehören, dass die Daten, welche über die erste Datenleitung erhalten werden, verstärkt, aufbereitet und bzw. oder gefiltert werden. Zur Übertragung zusätzlicher Daten zum Beispiel einer am Endeffektor angeordneten Kamera werden zusätzliche Datenleitungen verwendet, welche parallel zur seriellen kinematischen Kette der Antriebseinheiten entweder außen entlang oder durch die Antriebseinheiten innen hindurch geführt werden, wie eingangs beschrieben, was zu den eingangs beschriebenen Nachteilen führen kann.

In jedem Fall umgehen derartige bekannte Datenleitungen, welche neben den Adern zur Übertragung der Signale der Daten auch stets weitere Adern zur Übertragung elektrischer Energie aufweisen, die Steuerungseinheiten der Antriebseinheiten der mehrgliedrigen aktuierten Kinematik vollständig, d.h. verlaufen physisch bzw. physikalisch unabhängig von den Steuerungseinheiten der Antriebseinheiten und kontaktieren insbesondere die Steuerungseinheiten der Antriebseinheiten nicht. Neben den eingangs beschriebenen Nachteilen kann dies ferner dazu führen, dass das Verlegen bzw. die Montage einer derartigen bekannten zusätzlichen Datenleitung am Stück, d.h. integral einstückig über ihre gesamte Länge, durch alle Antriebseinheiten hindurch einen erheblichen Aufwand darstellen kann. Insbesondere kann dies die Reparatur bzw. den Austausch einer einzelnen Antriebseinheit innerhalb der seriellen kinematischen Kette erschweren bzw. verhindern, falls die bekannte zusätzliche Datenleitung nicht zerstörend durchtrennt werden soll.

Erfindungsgemäß wird daher die zweite Datenleitung, welche vergleichbar derartiger bekannter Datenleitungen der Übertragung von Daten an den Antriebseinheiten vorbei dient, mit den jeweiligen Steuerungseinheiten der Antriebseinheiten signalübertragend verbunden, wodurch eine abschnittsweise Ausbildung der erfindungsgemäßen zweiten Datenleitung in Teilstücken erfolgen kann, welche vorzugsweise jeweils genau zwei unmittelbar zueinander benachbarte Antriebseinheiten bzw. deren Steuerungseinheiten signalübertragend miteinander verbinden.

Vorteilhaft ist hierbei auch, dass die beiden unterschiedlichen Datenleitungen hinsichtlich der Anzahl ihrer Adern bzw. Leiter auf die Mengen bzw. Arten von zu übertragenen Daten bzw. deren Signalen abgestimmt werden können, was die Qualität der Datenübertragung bzw. der Signalübertragung verbessern und bzw. oder den erforderlichen Bauraum für die Datenleitungen geringhalten kann.

Vorteilhaft ist ferner, dass unterschiedliche Arten von Daten wie zum Beispiel Anweisungen, Befehle bzw. Steuerungsdaten auf der ersten Datenleitung und Daten wie zum Beispiel Informationen bzw. Sensordaten auf der zweiten Datenleitung physisch bzw. physikalisch voneinander getrennt übertragen werden können. Dies kann die Qualität der jeweiligen Datenübertragung erhöhen bzw. gewährleisten, dass eine geforderte Qualität der jeweiligen Datenübertragung erreicht bzw. eingehalten wird. Auch kann dies einen zeitlichen Verzug der Übertragung der jeweiligen Daten verringern bzw. vermeiden, da die Daten jeweils über eine separate Datenleitung übertragen werden können, welche auf das entsprechende Datenvolumen angepasst ausgelegt sein bzw. betrieben werden kann. Dies umfasst die Kabel der jeweiligen Datenleitung selbst sowie gegebenenfalls die entsprechenden Anschlüsse bzw. elektronischen Komponenten der Steuerungseinheiten, welche mit der jeweiligen Datenleitung signalübertragend verbunden sind und die Erzeugung und Aussendung der Signale ermöglichen.

Vorzugsweise wird somit wenigstens die zweite Datenleitung durch eine Mehrzahl einzelner Kabel gebildet, welche jeweils genau zwischen den Steuerungseinheiten zweier unmittelbar zueinander benachbarter Antriebseinheiten angeordnet sind, wobei die Kabel jeweils endseitig signalübertragend mit der jeweiligen Steuerungseinheit verbunden sind. Diese Verbindung kann vorzugsweise durch eine lösbare Steckverbindung umgesetzt werden, was die Montage sowie die Reparatur bzw. den Austausch der Antriebseinheiten vereinfachen und beschleunigen kann.

Vorzugsweise wird seitens der zweiten Datenleitung auf eine dazugehörige elektrische Versorgungsleitung verzichtet, wie sie von bekannten Datenleitungen wie eingangs beschrieben bekannt ist, um neben der Datenübertragung auch eine elektrische Versorgung zum Beispiel einer Kamera des Endeffektors unabhängig von den Antriebseinheiten der mehrgliedrigen aktuierten Kinematik bereitstellen zu können. Dies führt jedoch zu einer entsprechend dicken Ausbildung derartiger bekannter Datenleitungen, was für die Montage sowie für den Betrieb hinderlich sein kann, wie eingangs beschrieben. Auch kann die elektrische Versorgungsleitung derartiger bekannter Datenleitungen störend auf die Signalübertragung derartiger bekannter Datenleitungen sowie bekannter erster Datenleitungen wirken. Daher bei der erfindungsgemäßen zweiten Datenleitung vorzugsweise auf Adern zur Übertragung einer elektrischen Versorgungsspannung zu verzichten kann sowohl den erforderlichen Bauraum zum Verlegen der zweiten Datenleitung gering halten als auch störende Einflüsse der elektrischen Versorgungsspannung auf die Übertragung der Signale über die zweite Datenleitung vermeiden.

Gemäß einem Aspekt der Erfindung wird die erste Datenleitung zwischen zwei unmittelbar benachbarten Steuerungseinheiten der Antriebseinheiten durch wenigstens ein Kabel gebildet, wird die zweite Datenleitung zwischen zwei unmittelbar benachbarten Steuerungseinheiten der Antriebseinheiten durch wenigstens ein Kabel gebildet und werden das Kabel der ersten Datenleitung und das Kabel der zweiten Datenleitung zumindest abschnittsweise von einer gemeinsamen Schirmung umgeben. Hierdurch können beide Datenleitungen gemeinsam entsprechend geschirmt werden, um störende Einflüsse zum Beispiel seitens einer elektrischen Versorgungsleitung auf die Übertragung der Signale über die beiden Datenleitungen zu reduzieren oder sogar zu verhindern. Gleichzeitig kann der Aufwand der Schirmung durch die gemeinsame Schirmung geringer gehalten werden als wenn beide Datenleitungen jeweils eine eigene Schirmung aufweisen würden. Auch hierdurch kann der erforderliche Bauraum geringgehalten werden.

Gemäß einem weiteren Aspekt der Erfindung sind die Steuerungseinheiten der Antriebseinheiten ferner untereinander mit einer Versorgungsleitung elektrisch energieübertragend verbunden und ausgebildet, die erhaltene elektrische Energie sowohl wenigstens zum Betreiben des Antriebs zu erhalten als auch die erhaltene elektrische Energie weiterzuleiten. Auf diese Art und Weise kann den Steuerungseinheiten der Antriebseinheiten elektrische Energie sowohl zum Betrieb bzw. zur Versorgung elektronischer Bausteine der Steuerungseinheiten als auch zum Betrieb eines jeweiligen elektrischen Antriebs zur Verfügung gestellt werden. Eine derartige elektrische Versorgung kann mittels der Versorgungsleitung über die Steuerungseinheiten hinweg als geschlossener Stromkreis verlaufen.

Dies kann vorzugsweise dadurch umgesetzt werden, dass die Steuerungseinheiten der Antriebseinheiten jeweils einen Versorgungsleitungseingangsanschluss aufweisen, welcher elektrisch energieübertragend mit einem Kabel der Versorgungsleitung verbunden ist, und dass die Steuerungseinheiten der Antriebseinheiten jeweils einen Versorgungsleitungsausgangsanschluss aufweisen, welcher elektrisch energieübertragend mit einem weiteren Kabel der Versorgungsleitung verbunden ist.

Erfindungsgemäß weist die mehrgliedrige aktuierte Kinematik eine Endeffektoreinheit mit einem Endeffektor und mit einem Verbindungselement auf, welches mit einer endseitigen Antriebseinheit der serielle kinematische Kette der Antriebseinheiten verbunden ist, wobei das Verbindungselement wenigstens eine Datenverarbeitungseinheit, nämlich eine Bilderfassungseinheit, und eine Steuerungseinheit aufweist, wobei die Steuerungseinheit des Verbindungselements ausgebildet ist, wenigstens die Datenverarbeitungseinheit zu betreiben, wobei die Steuerungseinheit des Verbindungselements mit der ersten Datenleitung signalübertragend verbunden und ausgebildet ist, über die erste Datenleitung wenigstens Daten zum Betreiben der Datenverarbeitungseinheit, vorzugsweise und zum Betreiben des Endeffektors, zu erhalten und wobei die Steuerungseinheit des Verbindungselements ferner mit der zweiten Datenleitung signalübertragend verbunden und ausgebildet ist, die Daten der Datenverarbeitungseinheit über die zweite Datenleitung weiterzuleiten.

Unter einem Endeffektor kann eine Vorrichtung zur Interaktion mit der Umgebung zum Beispiel in Form eines Greifers, eine Saugers oder dergleichen angesehen werden, welcher mittels der Antriebseinheiten der mehrgliedrigen aktuierten Kinematik positioniert, orientiert sowie bewegt werden kann. Ein derartiger Endeffektor kann, vorzugsweise austauschbar, an einem Verbindungselement angeordnet sein, welches der mechanischen Verbindung zwischen dem eigentlichen Endeffektor und dem letzten Glied der seriellen kinematischen Kette der Antriebseinheiten der mehrgliedrigen aktuierten Kinematik dienen kann. Ein derartiges Verbindungselement kann auch als Medienflansch, als Endeffektorflansch, als Werkzeugflansch oder als Greiferflansch bezeichnet werden. Dabei können der Endeffektor und das Verbindungselement feststehend miteinander verbunden sein und gemeinsam als Endeffektoreinheit bezeichnet werden. Das Verbindungselement bzw. die Endeffektoreinheit können beweglich gegenüber derjenigen Antriebseinheit sein, welche das letzte Glied der seriellen kinematischen Kette der mehrgliedrigen aktuierten Kinematik bildet. Eine derartige Bewegung kann vorzugsweise rotatorisch erfolgen. In jedem Fall kann eine derartige Bewegung vorzugsweise seitens der Antriebseinheit erfolgen.

Neben dem Endeffektor kann ferner eine Datenverarbeitungseinheit an dem Verbindungselement angeordnet bzw. im Verbindungselement eingebaut bzw. integriert sein, um zusätzliche Funktionen an der Endeffektoreinheit umsetzen zu können. Hierzu ist die Datenverarbeitungseinheit als Bilderfassungseinheit ausgebildet, um optische Daten in Form von Bildern im Bereich der Endeffektoreinheit und vorzugsweise unmittelbar vor dem Endeffektor optisch zu erfassen. Die Steuerungseinheit des Verbindungselements kann lediglich dem Betrieb der Datenverarbeitungseinheit oder zusätzlich der Endeffektoreinheit dienen.

Werden bei bekannten Knickarmrobotern wie eingangs beschrieben die Daten derartiger Kameras, welche im Bereich des Endeffektors angeordnet sind, über eine bekannte Datenleitung außen an den Gehäusen der Antriebseinheiten vorbei bzw. durch die Antriebseinheiten hindurch übertragen, wie eingangs beschrieben, so kann erfindungsgemäß hierauf verzichtet und die entsprechenden Nachteile vermieden bzw. zumindest reduziert werden. Hierzu werden Daten insbesondere in Form von Anweisungen, Befehlen bzw. Steuerungsdaten über die erste Datenleitung von der Antriebseinheit als letztes Glied der seriellen kinematischen Kette der mehrgliedrigen aktuierten Kinematik zur Steuerungseinheit des Verbindungselements übertragen. Hierdurch können wenigstens die Datenverarbeitungseinheit und ggfs. zusätzlich der Endeffektor angesteuert bzw. betrieben werden. Ferner können die Daten wie insbesondere Informationen bzw. Sensordaten, welche im Falle der Verwendung einer Bilderfassungseinheit optischen Daten bzw. Bilddaten sein können, seitens der Steuerungseinheit des Verbindungselements von der Datenverarbeitungseinheit erhalten und über die zweite Datenleitung weitergeleitet bzw. ausgesendet werden. Dies kann es ermöglichen, die Daten, welche zum Betreiben der Datenverarbeitungseinheit und ggfs. der Endeffektoreinheit erforderlich sind, über die erste Datenleitung zu versenden und von den Daten der zweiten Datenleitung zu trennen, welche von der Datenverarbeitungseinheit, vorzugsweise als Bilderfassungseinheit, erzeugt werden und über die Steuerungseinheiten der Antriebseinheiten hinweg zum Beispiel an eine übergeordnete zentrale Steuerungseinheit übertragen werden können.

Dies kann vorzugsweise dadurch umgesetzt werden, dass die Steuerungseinheit des Verbindungselements einen ersten Datenleitungseingangsanschluss aufweist, welcher signalübertragend mit einem endseitigen Kabel der ersten Datenleitung verbunden ist, und die Steuerungseinheit des Verbindungselements einen zweiten Datenleitungseingangsanschluss aufweist, welcher signalübertragend mit einem endseitigen Kabel der zweiten Datenleitung verbunden ist.

Gemäß einem weiteren Aspekt der Erfindung ist die Steuerungseinheit des Verbindungselements durch eine zweite Datenleitung der Datenverarbeitungseinheit signalübertragend mit der Datenverarbeitungseinheit verbunden und ausgebildet, über die zweite Datenleitung der Datenverarbeitungseinheit Daten von der Datenverarbeitungseinheit zu erhalten, wobei die Steuerungseinheit des Verbindungselements ferner ausgebildet ist, die Daten der Datenverarbeitungseinheit über die zweite Datenleitung der Antriebseinheiten weiterzuleiten. Hierdurch können die Daten, welche von der Datenverarbeitungseinheit erzeugt werden können, von dessen Steuerungseinheit innerhalb des Verbindungselements an dessen Steuerungseinheit übertragen werden. Seitens der Steuerungseinheit des Verbindungselements können diese Daten dann direkt über die zweite Datenleitung der Antriebseinheiten weitergeleitet werden, um die Daten der Datenverarbeitungseinheit zum Beispiel einer übergeordneten zentrale Steuerungseinheit zur Verfügung zu stellen.

Dies kann vorzugsweise dadurch umgesetzt werden, dass die Steuerungseinheit des Verbindungselements einen zweiten Datenleitungsausgangsanschluss aufweist, welcher signalübertragend mit einem Kabel der zweiten Datenleitung verbunden ist, und dass die Datenverarbeitungseinheit eine Steuerungseinheit mit einem zweiten Datenleitungseingangsanschluss aufweist, welcher signalübertragend mit dem Kabel der zweiten Datenleitung der Datenverarbeitungseinheit verbunden ist.

Gemäß einem weiteren Aspekt der Erfindung ist die Steuerungseinheit des Verbindungselements mit der Versorgungsleitung elektrisch energieübertragend verbunden und ausgebildet, die erhaltene elektrische Energie wenigstens zum Betreiben des Endeffektors und zum Betreiben der Datenverarbeitungseinheit zu erhalten. Auf diese Art und Weise kann elektrische Energie vorzugsweise mittels einer elektrischen Versorgungsspannung dem Verbindungselement zur Verfügung gestellt werden, um wenigstens den Endeffektor und die Datenverarbeitungseinheit elektrisch versorgen bzw. betreiben zu können. Hierdurch kann auf eine separate elektrische Versorgungsleitung wie bisher bekannt, welche direkt zur Datenverarbeitungseinheit zum Beispiel in Form einer Kamera führt und lediglich dessen elektrischer Versorgung dient, verzichtet werden. Dies kann den Aufwand der zu verwendenden Leitungen bzw. deren Dicke reduzieren, wie zuvor bereits beschrieben. Auch können hierdurch elektrische Störungen auf die Signalübertragung vermieden werden. Vielmehr kann die elektrische Versorgung der Datenverarbeitungseinheit direkt seitens der Endeffektoreinheit bzw. des Verbindungselements erfolgen.

Dies kann vorzugsweise dadurch umgesetzt werden, dass die Steuerungseinheit des Verbindungselements einen Versorgungsleitungseingangsanschluss aufweist, welcher elektrisch energieübertragend mit einem Kabel der Versorgungsleitung verbunden ist.

Dies kann vorzugsweise dadurch zusätzlich oder alternativ umgesetzt werden, dass die Steuerungseinheit des Verbindungselements einen Versorgungsleitungsausgangsanschluss aufweist, welcher elektrisch energieübertragend mit einem Kabel einer Versorgungsleitung der Datenverarbeitungseinheit verbunden ist, und dass eine Steuerungseinheit der Datenverarbeitungseinheit einen Versorgungsleitungseingangsanschluss aufweist, welcher elektrisch energieübertragend mit dem Kabel der Versorgungsleitung der Datenverarbeitungseinheit verbunden ist.

Gemäß einem weiteren Aspekt der Erfindung ist die Steuerungseinheit des Verbindungselements ausgebildet, die elektrische Energie der Versorgungsleitung mit einer ersten Spannung zu erhalten und hieraus eine elektrische Energie einer zweiten, vorzugsweise geringeren, Spannung zu erzeugen, wobei die Steuerungseinheit des Verbindungselements ferner ausgebildet ist, die Datenverarbeitungseinheit mit der erzeugten zweiten Spannung zu betreiben. Mit anderen Worten kann die elektrische Spannung, welche als zweite elektrische Spannung der Versorgung bzw. dem Betrieb der Datenverarbeitungseinheit dient, direkt durch die Steuerungseinheit des Verbindungselements erzeugt werden. Aufgrund der Kürze der Übertragung dieser zweiten elektrischen Spannung im Bereich der Endeffektoreinheit bzw. des Verbindungselements kann eine hohe Stabilität der Spannungsversorgung der Datenverarbeitungseinheit erreicht werden.

Zu beachten ist dabei, dass bei bisher bekannten am Endeffektor angeordneten Kameras deren Spannungsversorgung über die Adern einer elektrischen Versorgungsleitung erfolgt, welche in die bekannte Datenleitung integriert ist. Dies kann neben einer Störung der Datenübertragung, wie zuvor beschrieben, auch dazu führen, dass die an der Kamera anliegende Spannung über die große Strecke der bekannten Datenleitung stabil gehalten werden muss, was zu einem entsprechend Aufwand führen kann. Auch kann dies zu zusätzlichen elektrischen Störungen der Datenübertragung führen.

Wird somit erfindungsgemäß die erforderliche zweite elektrische Spannung zur Versorgung der Datenverarbeitungseinheit seitens der Steuerungseinheit des Verbindungselements erst "vor Ort" erzeugt, kann mit einfachen Mitteln eine stabile Spannungsversorgung gewährleistet werden. Auch können hierdurch, wie zuvor beschrieben, elektrische Störungen entlang der zweiten Datenleitung vermieden werden, welche zu Problemen der elektromagnetischen Verträglichkeit (EMV) führen können.

Gemäß einem weiteren Aspekt der Erfindung weist die mehrgliedrige aktuierte Kinematik eine Basis auf, welche dazu ausgebildet ist, auf einem Untergrund feststehend angeordnet zu werden, wobei die Basis mit einer endseitigen Antriebseinheit der seriellen kinematischen Kette der Antriebseinheiten verbunden ist, wobei eine Steuerungseinheit der Basis mit der ersten Datenleitung signalübertragend verbunden und ausgebildet ist, Daten über die erste Datenleitung weiterzuleiten, wobei die Steuerungseinheit der Basis ferner mit der zweiten Datenleitung signalübertragend verbunden und ausgebildet ist, Daten über die zweite Datenleitung weiterzuleiten. Hierdurch kann eine Basis geschaffen werden, von welcher sich die Antriebseinheiten der mehrgliedrigen aktuierten Kinematik als serielle kinematische Kette weg erstrecken und gegenüber welcher die Antriebseinheiten Bewegungen ausführen können. Die Basis kann hierzu feststehend im Raum oder mobil beweglich auf einem fahrbaren Untersatz angeordnet sein. In jedem Fall können sowohl die erste Datenleitung als auch die zweite Datenleitung, vorzugsweise ferner eine Versorgungsleitung, wie zuvor beschrieben über die Basis hinweggeführt werden, um die entsprechenden Verbindungen zwischen den Leitungen und zum Beispiel einer übergeordneten zentrale Steuerungseinheit herstellen zu können.

Dies kann vorzugsweise dadurch umgesetzt werden, dass die Steuerungseinheit der Basis einen ersten Datenleitungseingangsanschluss aufweist, welcher signalübertragend mit dem Kabel der ersten Datenleitung verbunden ist, und dass die Steuerungseinheit der Basis einen ersten Datenleitungsausgangsanschluss aufweist, welcher signalübertragend mit dem Kabel der ersten Datenleitung verbunden ist.

Dies kann vorzugsweise dadurch zusätzlich oder alternativ umgesetzt werden, dass die Steuerungseinheit der Basis einen zweiten Datenleitungseingangsanschluss aufweist, welcher signalübertragend mit dem Kabel der zweiten Datenleitung verbunden ist, und dass die Steuerungseinheit der Basis einen zweiten Datenleitungsausgangsanschluss aufweist, welcher signalübertragend mit dem Kabel der zweiten Datenleitung verbunden ist.

Dies kann vorzugsweise dadurch zusätzlich oder alternativ umgesetzt werden, dass die Steuerungseinheit der Basis einen Versorgungsleitungseingangsanschluss aufweist, welcher elektrisch energieübertragend mit einem Kabel einer Versorgungsleitung einer übergeordneten zentralen Steuerungseinheit verbunden ist, und dass die Steuerungseinheit der Basis einen Versorgungsleitungsausgangsanschluss aufweist, welcher elektrisch energieübertragend mit dem Kabel einer Versorgungsleitung verbunden ist. Gemäß einem weiteren Aspekt der Erfindung ist die Steuerungseinheit der Basis ausgebildet, Daten über die zweite Datenleitung, vorzugsweise von der Datenverarbeitungseinheit, zu erhalten und signalverstärkt über die zweite Datenleitung, vorzugsweise nach außerhalb, weiterzuleiten. Auf diese Art und Weise können die Signale der Daten, welche über die zweite Datenleitung die Steuerungseinheit der Basis erreichen, verstärkt nach außen hin zum Beispiel zu einer übergeordneten zentralen Steuerungseinheit weitergeleitet bzw. ausgesendet werden, was die Qualität der Signalübertragung über größere Strecken verbessern bzw. gewährleisten kann.

Gemäß einem weiteren Aspekt der Erfindung weisen die Antriebseinheiten jeweils eine Hohlwelle auf und genau die erste Datenleitung und die zweite Datenleitung, vorzugsweise und die Versorgungsleitung, verlaufen durch die Hohlwelle hindurch. Auf diese Art und Weise können die entsprechenden Leitungen durch die Hohlwelle hindurch geführt werden, um die Steuerungseinheiten der Antriebseinheiten wie zuvor beschrieben miteinander zu verbinden. Dies kann insbesondere eine einfache Art der Verbindung der Steuerungseinheiten bei Antriebseinheiten sein, welche rotatorische Bewegungen ausführen können. Durch die erfindungsgemäße Umsetzung wenigstens der beiden Datenleitungen und vorzugsweise zusätzlich einer Versorgungsleitung kann dabei der erforderliche Bauraum innerhalb der Hohlwellen vergleichsweise geringgehalten werden, was entweder die Verwendung von Hohlwellen mit vergleichsweise kleinem Durchmesser ermöglichen oder den Leitungen einen vergleichsweise großen Bauraum bieten kann, wodurch die mechanischen Belastungen der Leitungen durch Abrieb aneinander und bzw. oder an der Innenfläche der Hohlwelle gegenüber bekannten mehrgliedrigen aktuierten Kinematiken mit Hohlwellen reduziert werden können. Letzteres kann die Lebensdauer der Leitungen und damit die Verfügbarkeit der mehrgliedrigen aktuierten Kinematik erhöhen.

Erfindungsgemäß ist die mehrgliedrige aktuierte Kinematik ein Roboter, vorzugsweise ein Knickarmroboter. Hierdurch können die zuvor beschriebenen Eigenschaften und Vorteile bei einem Roboter wie insbesondere bei einem Knickarmroboter bzw. bei einem Industrieroboter umgesetzt und angewendet werden.

Gemäß einem weiteren Aspekt der Erfindung ist die erste Datenleitung ein Bus. Unter einem Bus wird hinsichtlich der ersten Datenleitung ein System zur Datenübertragung zwischen den Steuerungseinheiten der Antriebseinheiten als Teilnehmer des gemeinsamen Bus-Systems bzw. Busses über die erste Datenleitung als gemeinsamen Übertragungsweg verstanden. Ein derartiger Bus kann vorzugsweise als ein EhternetCAT-Bus umgesetzt werden. Hierdurch können die Eigenschaften und Vorteile eines Bus-Systems bzw. Busses zu signalübertragenden Verbindung der Steuerungseinheiten der Antriebseinheiten verwendet werden.

Gemäß einem weiteren Aspekt der Erfindung ist die zweite Datenleitung eine USB-Leitung. Unter einer USB-Leitung wird eine Leitung nach dem USB-Standard verstanden. Auf diese Art und Weise können an die zweite Datenleitung an beiden Enden jeweils Datenverarbeitungseinheiten wie zum Beispiel eine Bildverarbeitungseinheit der Endeffektoreinheit oder eine übergeordnete zentrale Steuerungseinheit gemäß dem USB-Standard angeschlossen werden. Dies kann insbesondere seitens der Endeffektoreinheit die Verwendung von bekannten und einfachen sowie kostengünstig verfügbaren Datenverarbeitungseinheiten ermöglichen, welche ihrerseits eine USB-Schnittstelle aufweisen. Hierdurch kann eine große Auswahl an kostengünstigen und leistungsfähigen Datenverarbeitungseinheiten einfach und direkt insbesondere seitens der Endeffektoreinheit verwendet werden, was die Möglichkeiten der mehrgliedrigen aktuierten Kinematik erhöhen und gleichzeitig die Kosten und den Aufwand hierfür geringhalten kann.

Offenbart ist auch eine nicht beanspruchte Antriebseinheit zur Verwendung in einer mehrgliedrigen aktuierten Kinematik wie zuvor beschrieben, wobei die Antriebseinheit ausgebildet ist, mit wenigstens einer weiteren Antriebseinheit zu einer seriellen kinematischen Kette verbunden zu werden, wobei die Antriebseinheit eine Steuerungseinheit aufweist, welche ausgebildet ist, wenigstens einen Antrieb der Antriebseinheit zur Durchführung einer Bewegung der Antriebseinheit zu betreiben, wobei die Steuerungseinheit ferner ausgebildet ist, durch eine erste Datenleitung mit der weiteren Antriebseinheit signalübertragend verbunden zu werden und über die erste Datenleitung wenigstens Daten zum Betreiben des Antriebs zu erhalten, wobei die Steuerungseinheit ferner ausgebildet ist, durch eine zweite Datenleitung mit der weiteren Antriebseinheit signalübertragend verbunden zu werden und die Daten der zweiten Datenleitung weiterzuleiten. Auf diese Art und Weise kann eine Antriebseinheit zur Verfügung gestellt werden, um eine mehrgliedrige aktuierte Kinematik wie zuvor beschrieben umsetzen und dessen Eigenschaften und Vorteile realisieren zu können.

Offenbart ist auch eine nicht beanspruchte Steuerungseinheit zur Verwendung in einer Antriebseinheit wie zuvor beschrieben, wobei die Steuerungseinheit ausgebildet ist, wenigstens einen Antrieb der Antriebseinheit zur Durchführung der Bewegung der Antriebseinheit zu betreiben, wobei die Steuerungseinheit ferner ausgebildet ist, durch eine erste Datenleitung mit einer weiteren Antriebseinheit signalübertragend verbunden zu werden und über die erste Datenleitung wenigstens Daten zum Betreiben des Antriebs zu erhalten, wobei die Steuerungseinheit ferner ausgebildet ist, durch eine zweite Datenleitung mit der weiteren Antriebseinheit signalübertragend verbunden zu werden und die Daten der zweiten Datenleitung weiterzuleiten. Auf diese Art und Weise kann eine Steuerungseinheit zur Verfügung gestellt werden, um eine Antriebseinheit wie zuvor beschrieben umsetzen und dessen Eigenschaften und Vorteile realisieren zu können.

Mit anderen Worten liegt der vorliegenden Erfindung die Erkenntnis zugrunde, dass bekannte Industrieroboter üblicherweise aus mehreren Antriebseinheiten mit dezentralen Regelungseinheiten bestehen, welche üblicherweise über einen Feldbus miteinander kommunizieren. Im Bereich der kollaborativen Robotik sind dies insbesondere serielle Modbus- und EtherCAT-Kommunikation. Diese Kommunikation ist auf die Übertragung der Roboterinformationen ausgerichtet und erlaubt nur die Übertragung weniger zusätzlicher Datenmengen für weitere Anwendungen wie zum Beispiel für externe Geräte, welche die Funktionen des Roboters erweitern können, jedoch nicht die Umsetzung der Bewegung des Roboters betreffen.

Für neue Anwendungsfelder und für die Wahrnehmung der Umwelt können Kameras am Roboterarm verwendet werden. Da der interne Feldbus, wie zuvor dargestellt, üblicherweise nicht ausreichend Datenmengen übertragen bzw. zur Verfügung stellen kann, werden häufig externe Kabel am Roboterarm entlang verlegt. Ein derartiges externes Kabel, welches außen an der Roboterstruktur entlang verlegt ist, kann jedoch eine Gefahr für den Prozess darstellen, weil sich andere Objekte oder Menschen in der Kabelschlaufe verfangen können. Außerdem werden solche Kabel üblicherweise händisch verlegt, was aufwendig sein kann. Auch können derartige Kabel die Bewegungsfreiheit und den Arbeitsraum des Roboters einschränken.

Eine weitere Möglichkeit besteht darin, ein zusätzliches Kabel durch den Roboterarm hierdurch zu verlegen. Dieses zusätzliche Kommunikationskabel für das externe Gerät ist im Roboterarm jedoch nur schwer realisierbar, da bei Verwendung eines Hohlwellengetriebes nur ein begrenzter Bauraum für die Kabelführung vorhanden sein kann, durch welchen hindurch bereits die vorhandenen Versorgungsleitungen und das Kommunikationskabel für den Feldbus geführt werden und welche den Bauraum der Hohlwelle im Wesentlichen ausfüllen können. Durch ein weiteres Kabel eines externen Geräts kann sich die Steifigkeit des Kabelstrangs erhöhen und es kann ein Kabelbruch drohen bzw. kann dies zu einer verringerten Lebensdauer der geschirmten Kabel führen.

Vor diesem Hintergrund kann es erstrebenswert sein, eine vereinfachte Kabelführung für die Anbindung und bidirektionale Kommunikation von Sensoren oder Aktoren wie z.B. Kamera, Beleuchtung, Speicher, Greifer und dergleichen als externe Geräte an einem Industrieroboter zu erreichen. Dabei soll möglichst die Bewegung des Roboters nicht eingeschränkt werden und es soll möglichst keine Gefahr für den Prozess entstehen.

Erfindungsgemäß kann hierzu ein Kommunikationskabel für das externe Gerät durch den Roboterarm geführt werden, damit kein Kabel extern am Roboter verläuft. Hierdurch könnte, wie zuvor beschrieben, ein Risiko bestehen, dass sich Personen oder Objekte in entstehenden Kabelschlaufen verfangen könnten. Daher kann erfindungsgemäß das Kommunikationskabel für das externe Gerät innerhalb des Roboters von Steuerungseinheit zu Steuerungseinheit der einzelnen Antriebseinheiten verlaufen und vorzugsweise in jeder Antriebseinheit durch eine steckbare Verbindung getrennt werden können. Dadurch kann sich der Aufbau des Roboterarms vereinfachen, da der Roboter nicht entlang eines starren Kabels aufgebaut werden muss. Zum anderen können sich dadurch Antriebseinheiten für Montage oder Reparatur einfacher ausbauen lassen. Auch kann eine gemeinsame Schirmung der Datenkabel vorgesehen werden.

Erfindungsgemäß kann somit in einen Medienflansch als letzte aktive Komponente des Roboters eine Kamera oder eine andere Komponenten als externes Gerät eingebaut werden. Hierzu kann eine handelsübliche USB-Kamera verwendet werden, wobei auch andere Kameras bzw. andere externe Geräte denkbar sind. Um den Fokus der Kamera im Prozess einstellen zu können, kann vor der Kamera eine Flüssigkeitslinse eingebaut sein. So kann, in Abhängigkeit der Kameraposition, das Kamerabild automatisch fokussiert werden. Die Kamera kann durch einen O-Ring und eine Scheibe vor dem Eindringen von Staub und Flüssigkeiten geschützt werden.

Das USB-Kabel der Kamera kann an die Steuerungseinheit des Medienflansches angeschlossen werden. Das USB-Kabel kann aus insgesamt vier Leitern bestehen und zwei Leiter für die elektrische Versorgung (5V und GND) sowie zwei Kommunikationsleiter bzw. Datenleiter aufweisen (Rx und Tx), welche gemeinsam eine zusätzliche, zweite Datenleitung bilden können.

Auf der Steuerungseinheit des Medienflansches kann das USB-Signal der Kamera aufgetrennt werden. Die beiden Versorgungsleitungen (5V und GND) können an einen Stromkreis angeschlossen werden, der auf der Steuerungseinheit des Medienflansches erzeugt werden kann. Es wäre technisch auch möglich, diese Versorgungsspannung auf einer anderen Steuerungseinheit innerhalb der Roboterstruktur zu erzeugen. In jedem Fall kann durch die angepasste Spannungsversorgung eine stabile Spannungsversorgung trotz großer Distanz zwischen USB-Quelle und Ziel wie zum Beispiel einer übergeordneten zentralen Steuerungseinheit des Roboters umgesetzt werden, sodass eine EMV-stabile elektrische Versorgung der USB-Kamera sichergestellt werden kann. Außerdem kann hierdurch vermieden werden, die beiden Versorgungsleiter der USB-Kamera durch den Roboterarm führen zu müssen, wodurch sich die Anzahl der notwendigen Leiter bzw. Leitungen reduzieren kann. Hierdurch kann eine kleinere Hohlwelle in den Antriebseinheiten verwendet werden. Wird eine größere Hohlwelle verwendet, so kann es zu weniger Reibung zwischen den Kabeln der Leitungen und der Hohlwelle kommen, wodurch weniger Abrieb und eine längere Lebensdauer der Kabel der Leitungen erreicht werden können.

Die beiden Kommunikationsleiter (Rx und Tx) der zusätzlichen, zweiten Datenleitung können zusammen mit den Kommunikationsleitern des Feldbuses (EtherCat, 4 Leiter) als erste Datenleitung in einem Kommunikationskabel mit einem Schirm zusammen durch die Hohlwelle der sechsten Antriebseinheit geführt werden.

In jeder Antriebseinheit kann das Kommunikationskabel (bestehend aus den vier EtherCAT-Leitern der ersten Datenleitung und den zwei USB-Leitern (Rx und Tx) der zweiten Datenleitung) an die Steuerungseinheit der jeweiligen Antriebseinheit angeschlossen werden. Hier können die Feldbussignale (EtherCAT) der ersten Datenleitung für die Kommunikation zwischen den Steuerungseinheiten verwendet und die USB-Kommunikationsleiter der zweiten Datenleitung weitergeleitet werden. Dadurch können die beiden Signaltypen (EtherCAT und USB) physisch bzw. pyhsikalisch voneinander getrennt werden, sodass eine höhere Bandbreite bei der Datenkommunikation zur Verfügung stehen und bei einer Risikoanalyse ein geringeres Risiko für einen Datenverlust berücksichtigt werden kann.

Von dieser sechsten, letzten Antriebseinheit kann das Kommunikationskabel mit den beiden Datenleitungen zur nächsten Antriebseinheit und von dort genau so weiter bis zur ersten Antriebseinheit führen.

Von der ersten Antriebseinheit kann das Kommunikationskabel mit den beiden Datenleitungen zur Basis des Roboters führen. Mit der Basis kann der Roboter auf eine Oberfläche angeschraubt sein. Zusätzlich kann an der Basis eine Anbindung zwischen Roboterarm und Robotersteuerung bzw. Schaltschrank für das Roboterkabel montiert sein.

Um das USB-Signal zu verstärken kann eine zusätzliche Platine in der Basis verbaut sein. Auf dieser Platine kann sich ein USB-Hub-Baustein zur Ausgabe von Daten befinden, welcher Störungen aus dem USB-Signal herausfiltern und bzw. oder eine stabile Verbindung sicherstellen kann.

Von der Platine in der Roboterbasis kann dann ein Standard Twisted-Pair-Kabel (Netzwerkkabel) der Kategorie 6 in das Roboterkabel führen. Auf diesem Kabel können vier Leiter für den Feldbus der ersten Datenleitung und zwei weitere Leiter für die USB-Kommunikation der zweiten Datenleitung verwendet werden. Das Roboterkabel kann mit einem RJ45-Stecker an die Robotersteuerung (Schaltschrank) angeschlossen werden. In der Robotersteuerung kann das Netzwerkkabel mit den beiden Datenleitungen mit der Steuerungseinheit der Robotersteuerung als übergeordnete zentrale Steuerungseinheit angeschlossen sein. Dort oder auch bereits vorher können die Leiter des Netzwerkkabels der beiden Datenleitungen aufgeteilt und die beiden USB-Leiter der zweiten Datenleitung auf einen USB-Stecker geführt werden. Über diesen Stecker kann das USB-Signal der zweiten Datenleitung mit dem USB-Ziel (Steuerungsrechner) verbunden werden.

Diese erfindungsgemäße Lösung kann mehrere Vorteile bieten. Eine USB-Schnittstelle kann den Anschluss von Industrie- und Verbraucherkomponenten ermöglichen, sodass eine große Auswahl an kostengünstigen und leistungsfähigen Erweiterungen an den Roboter angeschlossen werden kann. Der Aufbau kann kostengünstig erfolgen, da Standardbauteile verwendet werden können. Durch die geänderte Spannungsversorgung des Medienflansches und bzw. oder durch den Verstärkerbaustein des Basis kann eine EMV-robuste Lösung erzielt werden. Mit den Steckvorgängen im Roboterarm kann sich der Aufbau einfach montieren lassen und der Roboterarm kann wartungsfreundlich sein. Es ist auch denkbar, durch diesen Aufbau variabel bei der Anzahl der eingesetzten Antriebseinheiten zu sein.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine perspektivische schematische Darstellung einer erfindungsgemäßen mehrgliedrigen aktuierten Kinematik;
- Figur 2: einen Ausschnitt der Figur 1 im Bereich der Basis;
- Figur 3: einen schematischen Querschnitt der Ansicht der Figur 2;
- Figur 4: einen Ausschnitt der Figur 1 im Bereich der Endeffektoreinheit;
- Figur 5: einen schematischen Querschnitt der Ansicht der Figur 4;
- Figur 6: eine schematische Darstellung des Kabels der zweiten Datenleitung und des Kabels der Versorgungsleitung des Verbindungselements; und
- Figur 7: eine schematische Darstellung der Kabel der ersten Datenleitung, der zweiten Datenleitung und der Versorgungsleitung der sechsten Antriebseinheiten.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

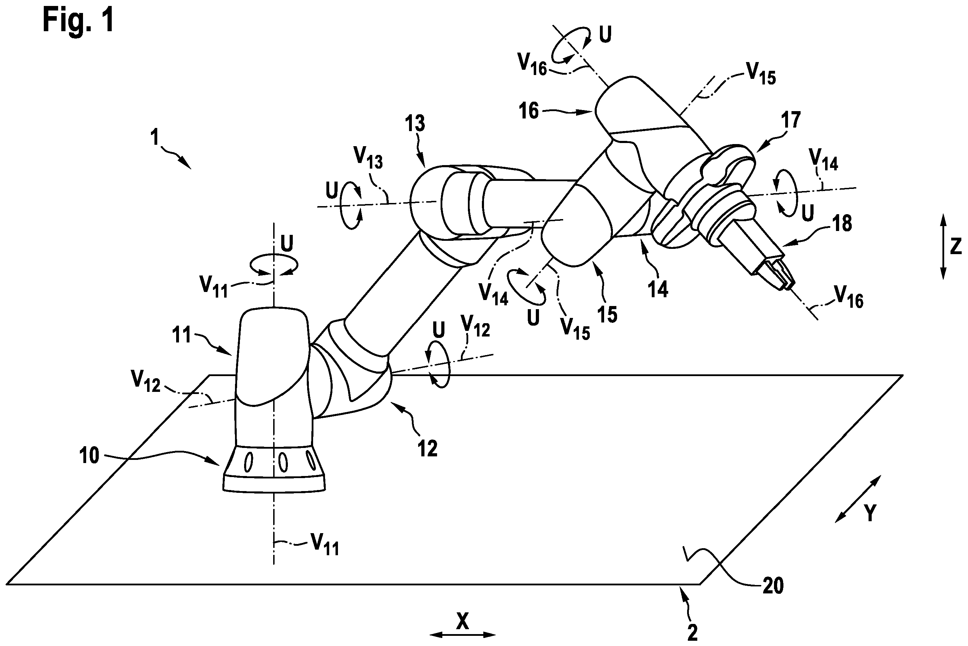

Es wird beispielhaft eine erfindungsgemäße mehrgliedrige aktuierte Kinematik 1 in Form eines Roboters 1 bzw. in Form eines Knickarmroboters 1 betrachtet, siehe zum Beispiel Figur 1. Der Knickarmroboter 1 weist eine Basis 10 auf, welche feststehend in der vertikalen Richtung Z auf einer Untergrundfläche 20 eines Untergrunds 2 angeordnet ist. Von der Basis 10 erstrecken sich sechs Antriebseinheiten 11-16 hintereinander als serielle kinematische Kette weg. An der sechsten Antriebseinheit 16 als äußerstes Glied der seriellen kinematischen Kette ist ein Verbindungselement 17 angeordnet, welches einen Endeffektor 18 in Form eines Greifers auswechselbar feststehend an sich aufnimmt. Das Verbindungselement 17 kann daher auch als Medienflansch 17, als Endeffektorflansch 17, als Werkzeugflansch 17 oder als Greiferflansch 17 bezeichnet werden. Das Verbindungselement 17 und der Endeffektor 18 bilden gemeinsam eine Endeffektoreinheit 17, 18.

Die sechs Antriebseinheiten 11-16 weisen jeweils einen elektrischen Antrieb 11c, 12c, 16c auf, welche jeweils einen antriebsseitigen Teilbereich gegenüber einem abtriebsseitigen Teilbereich der entsprechenden Antriebseinheit 11-16 rotatorisch gegenüber einander bewegen können. Hierdurch können die sechs Antriebseinheiten 11-16 jeweils um eine Rotationsachse V₁₁-V₁₆ in einer Rotationsrichtung U bzw. Umdrehungsrichtung U gedreht werden, siehe zum Beispiel Figur 1.

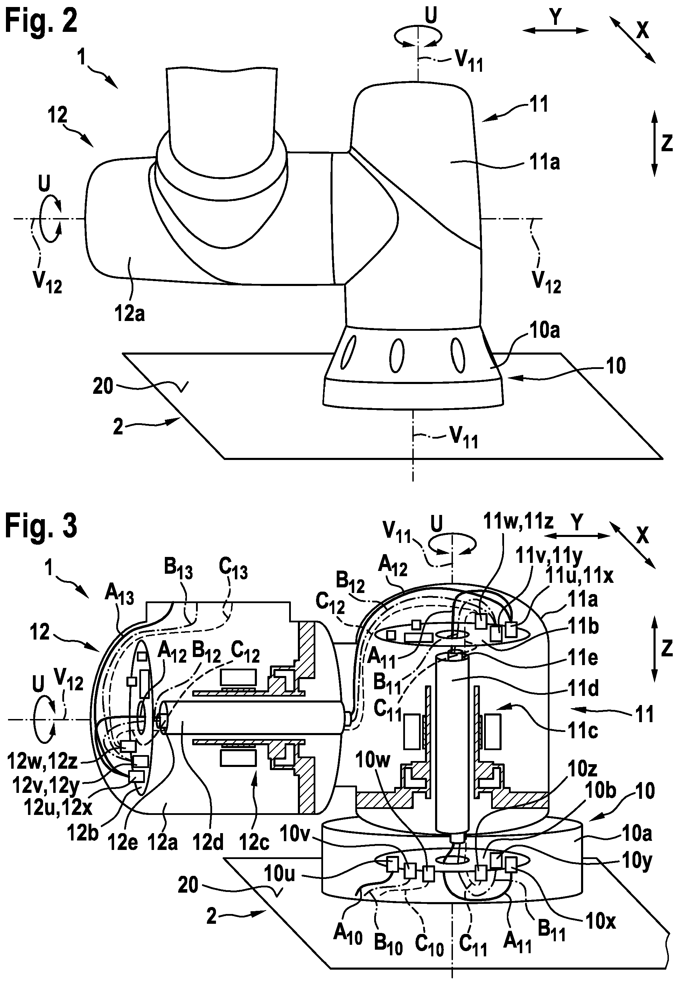

Die Basis 10 weist ein Gehäuse 10a auf, welches die Komponenten der Basis 10 seitlich nach außen umschließt und gegenüber der Umgebung schützt, siehe zum Beispiel Figuren 2 und 3. Innerhalb des Gehäuses 10a ist eine Steuerungseinheit 10b der Basis 10 angeordnet, welche als Platine mit elektronischen Bausteinen bestückt ausgebildet ist. Über einen ersten Datenleitungseingangsanschluss 10u ist die Steuerungseinheit 10b der Basis 10 signalübertragend mit einem Kabel A₁₉ einer ersten Datenleitung A₁₀, A₁₁, A₁₂, A₁₃, A₁₆, A₁₇ verbunden. Über das Kabel A₁₉ der ersten Datenleitung A₁₀, A₁₁, A₁₂, A₁₃, A₁₆, A₁₇ können Daten in Form von Anweisungen, Befehlen bzw. Steuerungsdaten von einer übergeordneten zentralen Steuerungseinheit (nicht dargestellt) zur Steuerungseinheit 10b der Basis 10 übertragen werden, welche sowohl dort umgesetzt als auch über einen ersten Datenleitungsausgangsanschluss 10x der Basis 10 weitergeleitet werden können.

Die Steuerungseinheit 10b der Basis 10 weist ferner einen zweiten Datenleitungseingangsanschluss 10v auf, welcher signalübertragend mit einem Kabel B₁₀ einer zweiten Datenleitung B₁₀, B₁₁, B₁₂, B₁₃, B₁₆, B₁₇, B₁₉ verbunden ist. Über das Kabel B₁₀ der zweiten Datenleitung B₁₀, B₁₁, B₁₂, B₁₃, B₁₆, B₁₇, B₁₉ können Daten in Form von Informationen bzw. Sensordaten, welche insbesondere Bilddaten sein können, von der Steuerungseinheit 10b der Basis 10 über einen zweiten Datenleitungsausgangsanschluss 10y der Basis 10 erhalten und zu der übergeordneten zentralen Steuerungseinheit übertragen werden, um dort verarbeitet und verwendet zu werden.

Die Steuerungseinheit 10b der Basis 10 weist ferner einen Versorgungsleitungseingangsanschluss 10w auf, welche elektrisch mit einem Kabel C₁₀ einer Versorgungsleitung C₁₀, C₁₁, C₁₂, C₁₃, C₁₆, C₁₇, C₁₉ verbunden ist. Über das Kabel C₁₀ der Versorgungsleitung C₁₀, C₁₁, C₁₂, C₁₃, C₁₆, C₁₇, C₁₉ kann elektrische Energie in Form einer elektrischen Spannung von der übergeordneten zentralen Steuerungseinheit der Steuerungseinheit 10b der Basis 10 zur Verfügung gestellt werden, um die Steuerungseinheit 10b der Basis 10 selbst elektrisch zu versorgen bzw. zu betreiben sowie um die elektrische Spannung über einen Versorgungsleitungsausgangsanschluss 10z der Basis 10 weiterzuleiten.

Die erste Antriebseinheit 11 weist ebenso ein Gehäuse 11a auf. Innerhalb des Gehäuses 11a der ersten Antriebseinheit 11 ist eine Steuerungseinheit 11b angeordnet welche ebenfalls als Platine mit elektronischen Bauteilen bestückt ausgebildet ist. Die Steuerungseinheit 11b der ersten Antriebseinheit 11 weist ebenfalls einen ersten Datenleitungseingangsanschluss 11u auf, welche über ein Kabel A₁₁ der ersten Datenleitung A₁₀, A₁₁, A₁₂, A₁₃, A₁₆, A₁₇ signalübertragend mit dem ersten Datenleitungsausgangsanschluss 10x der Steuerungseinheit 10b der Basis 10 verbunden ist. Über das Kabel A₁₁ der ersten Datenleitung A₁₀, A₁₁, A₁₂, A₁₃, A₁₆, A₁₇ können die Steuerungsdaten der übergeordneten dezentralen Steuerungseinheit von der Steuerungseinheit 10b der Basis 10 an die Steuerungseinheit 11b der ersten Antriebseinheit 11 weitergeleitet werden, um ihrerseits dort umgesetzt oder über einen ersten Datenleitungsausgangsanschluss 11x der Steuerungseinheit 11b der ersten Antriebseinheit 11 weitergeleitet zu werden.

Die Steuerungseinheit 11b der ersten Antriebseinheit 11 weist ferner einen zweiten Datenleitungseingangsanschluss 11v auf, welcher über ein Kabel B₁₁ der zweiten Datenleitung B₁₀, B₁₁, B₁₂, B₁₃, B₁₆, B₁₇, B₁₉ signalübertragend mit dem zweiten Datenleitungsausgangsanschluss 10y der Steuerungseinheit 10b der Basis 10 verbunden ist. Über das Kabel B₁₁ der zweiten Datenleitung B₁₀, B₁₁, B₁₂, B₁₃, B₁₆, B₁₇, B₁₉ können Daten, welche einer Datenverarbeitungseinheit 19 entstammen, von der Steuerungseinheit 11b der ersten Antriebseinheit 11 über einen zweiten Datenleitungsausgangsanschluss 11y der ersten Antriebseinheit 11 erhalten und zu der Steuerungseinheit 10b der Basis 10 übertragen bzw. weitergeleitet werden.

Die Steuerungseinheit 11b der ersten Antriebseinheit 11 weist ferner einen Versorgungsleitungseingangsanschluss 11w auf, welcher über ein Kabel C₁₁ der Versorgungsleitung C₁₀, C₁₁, C₁₂, C₁₃, C₁₆, C₁₇, C₁₉ elektrisch leitend mit dem Versorgungsleitungsausgangsanschluss 10z der Steuerungseinheit 10b der Basis 10 verbunden ist. Über das Kabel C₁₁ der Versorgungsleitung C₁₀, C₁₁, C₁₂, C₁₃, C₁₆, C₁₇, C₁₉ kann elektrische Energie mittels einer elektrischen Spannung der Steuerungseinheit 10b der Basis 10 der Steuerungseinheit 11b der ersten Antriebseinheit 11 zur Verfügung gestellt werden, um die Steuerungseinheit 11b der ersten Antriebseinheit 11 selbst elektrisch zu versorgen bzw. zu betreiben sowie um die elektrische Spannung über einen Versorgungsleitungsausgangsanschluss 11z ersten Antriebseinheit 11 weiterzuleiten.

Das Kabel A₁₁ der ersten Datenleitung A₁₀, A₁₁, A₁₂, A₁₃, A₁₆, A₁₇ und das Kabel B₁₁ der zweiten Datenleitung B₁₀, B₁₁, B₁₂, B₁₃, B₁₆, B₁₇, B₁₉ werden dabei von einer gemeinsamen Schirmung 11e umgeben, innerhalb welcher lediglich das Kabel A₁₁ der ersten Datenleitung A₁₀, A₁₁, A₁₂, A₁₃, A₁₆, A₁₇ und das Kabel B₁₁ der zweiten Datenleitung B₁₀, B₁₁, B₁₂, B₁₃, B₁₆, B₁₇, B₁₉ angeordnet sind. Hierdurch kann die Signalübertragung über das Kabel A₁₁ der ersten Datenleitung A₁₀, A₁₁, A₁₂, A₁₃, A₁₆, A₁₇ und das Kabel B₁₁ der zweiten Datenleitung B₁₀, B₁₁, B₁₂, B₁₃, B₁₆, B₁₇, B₁₉ vor elektrischen Störungen geschützt werden, was die Qualität der Signalübertragung verbessern bzw. gewährleisten kann.

Sowohl das Kabel A₁₁ der ersten Datenleitung A₁₀, A₁₁, A₁₂, A₁₃, A₁₆, A₁₇ und das Kabel B₁₁ der zweiten Datenleitung B₁₀, B₁₁, B₁₂, B₁₃, B₁₆, B₁₇, B₁₉ innerhalb ihrer Schirmung 11e als auch das Kabel C₁₁ der Versorgungsleitung C₁₀, C₁₁, C₁₂, C₁₃, C₁₆, C₁₇, C₁₉ verlaufen parallel zueinander gemeinsam durch eine Hohlwelle 11d des Antriebs 11c der ersten Antriebseinheit 11 hindurch. Auf diese Art und Weise kann eine kabelgebundene Verbindung zwischen der Steuerungseinheit 10b der Basis 10 und der Steuerungseinheit 11b der ersten Antriebseinheit 11 erreicht werden, welche gleichzeitig die Rotationsbewegungen zu lassen kann.

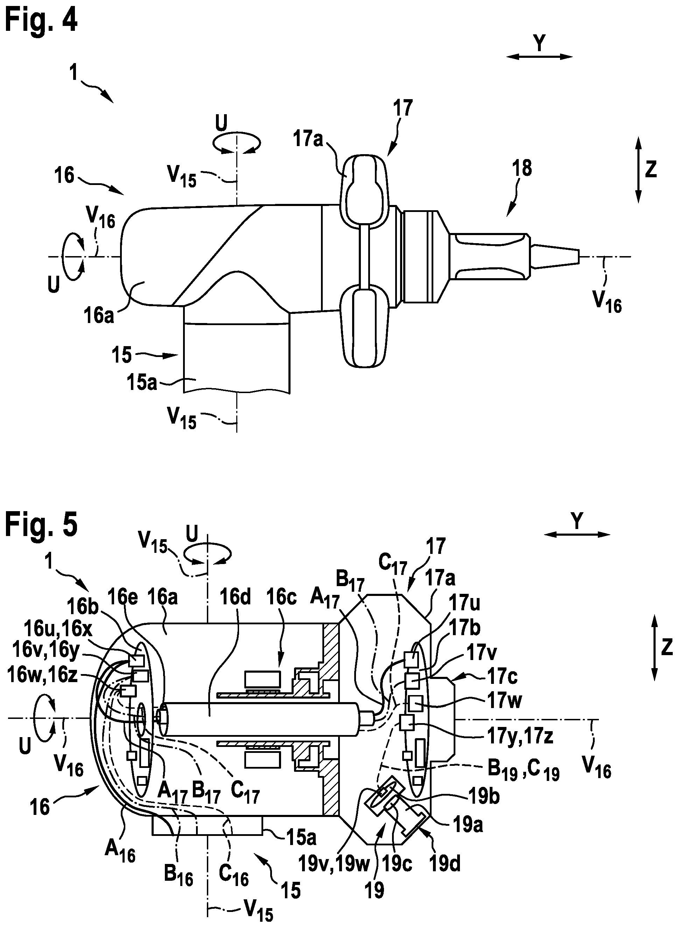

Auf dieselbe Art und Weise ist die zweite Antriebseinheit 12 ausgebildet und mit der ersten Antriebseinheit 11 verbunden, siehe ebenfalls zum Beispiel Figuren 2 und 3. Dies gilt ebenso für die dritte Antriebseinheit 13, für die vierte Antriebseinheit 14, für die fünfte Antriebseinheit 15 sowie für die sechste Antriebseinheit 16, welche zum Beispiel in den Figuren 4 und 5 dargestellt ist. Die entsprechenden Elemente sind fortlaufend einheitlich bezeichnet und mit Bezugszeichen versehen, sodass auf die zweite bis sechste Antriebseinheit 12-16 zur Vermeidung von Wiederholungen nicht näher eingegangen werden soll.

An die sechste Antriebseinheit 16 schließt sich drehbar beweglich das Verbindungselement 17 an, welches seinerseits ein Gehäuse 17a aufweist. An dem Gehäuse 17a des Verbindungselements 17 ist ein Endeffektoranschluss 17c zur Befestigung des Endeffektors 18 ausgebildet.

Das Verbindungselement 17 weist ferner die bereits erwähnte Datenverarbeitungseinheit 19 auf, welche als Bilderfassungseinheit 19 bzw. als Kamera 19 ausgebildet und mit ihrer Optik 19d auf den Bereich vor dem Endeffektor 18 ausgerichtet ist. Die Bilderfassungseinheit 19 weist ihrerseits ein Gehäuse 19a auf, welches eine Steuerungseinheit 19b der Bildverarbeitungseinheit 19 als mit elektronischen Bauteilen bestückte Platine umschließt. Die Steuerungseinheit 19b der Bilderfassungseinheit 19 ist mit einem Bilderfassungssensor 19c der Bilderfassungseinheit 19 signalübertragend verbunden (nicht dargestellt). Der Bilderfassungssensor 19c kann durch die Optik 19d hindurch den Bereich vor dem Endeffektor 18 erfassen. Die sensorisch erfassten Informationen können als optische Daten bzw. als Bilddaten von der Steuerungseinheit 19b der Bilderfassungseinheit 19 ausgegeben bzw. ausgesendet werden, wie anschließend näher erläutert werden wird.

Auch das Verbindungselement 17 weist eine Steuerungseinheit 17b als Platine mit elektronischen Bauteilen bestückt auf. Das Kabel A₁₇ der ersten Datenleitung A₁₀, A₁₁, A₁₂, A₁₃, A₁₆, A₁₇ ist signalübertragend mit einem ersten Datenleitungseingangsanschluss 17u der Steuerungseinheit 17b des Verbindungselements 17 signalübertragend verbunden, sodass die Steuerungsdaten auch die Steuerungseinheit 17b des Verbindungselements 17 erreichen können. Die Steuerungsdaten können dort für den Betrieb bzw. für die Bedienung des Endeffektors 18 verwendet werden. Die Steuerungsdaten können auch den Betrieb bzw. der Bedienung der Bilderfassungseinheit 19 dienen.

Hierdurch kann eine durchgehende Anordnung der ersten Datenleitung A₁₀, A₁₁, A₁₂, A₁₃, A₁₆, A₁₇ von der Basis 10 bis zum Verbindungselement 17 erreicht werden, welche von den einzelnen Kabeln A₁₀, A₁₁, A₁₂, A₁₃, A₁₆, A₁₇ der ersten Datenleitung A₁₀, A₁₁, A₁₂, A₁₃, A₁₆, A₁₇ gebildet wird, welche somit gemeinsam die erste Datenleitung A₁₀, A₁₁, A₁₂, A₁₃, A₁₆, A₁₇ darstellen. Insbesondere kann hierdurch ein Bus wie zum Beispiel ein EtherCAT-Bus gebildet werden, welcher die Steuerungseinheiten 10b, 11b, 12b, 16b, 17b der Basis 10, der Antriebseinheiten 11-16 und des Verbindungselements 17 miteinander signalübertragend verbindet. Hierdurch können die jeweiligen Steuerungseinheiten 10b, 11b, 12b, 16b, 17b mit Steuerungsdaten versorgt und hierdurch gesteuert bzw. betrieben werden. Steuerungsdaten, welche für andere Steuerungseinheiten 10b, 11b, 12b, 16b, 17b bestimmt sind, können von der jeweiligen Steuerungseinheit 10b, 11b, 12b, 16b, 17b weitergeleitet werden.

Das Kabel B₁₇ der zweiten Datenleitung B₁₀, B₁₁, B₁₂, B₁₃, B₁₆, B₁₇, B₁₉ ist signalübertragend mit einem zweiten Datenleitungseingangsanschluss 17v der Steuerungseinheit 17b des Verbindungselements 17 signalübertragend verbunden. Die Bilddaten der Bilderfassungseinheit 19 können über einen zweiten Datenleitungseingangsanschluss 19v der Steuerungseinheit 19b der Datenverarbeitungseinheit 19 über ein Kabel B₁₉ der zweiten Datenleitung B₁₀, B₁₁, B₁₂, B₁₃, B₁₆, B₁₇, B₁₉ an einen zweiten Datenleitungsausgangsanschluss 17y der Steuerungseinheit 17b des Verbindungselements 17 übertragen werden. Seitens der Steuerungseinheit 17b des Verbindungselements 17 können die Bilddaten dann über alle weiteren Kabel B₁₀, B₁₁, B₁₂, B₁₃, B₁₆, B₁₇ der zweiten Datenleitung B₁₀, B₁₁, B₁₂, B₁₃, B₁₆, B₁₇, B₁₉ zur übergeordneten zentralen Steuerungseinheit übertragen werden. Seitens der Steuerungseinheit 10b der Basis 10 kann vor der Weiterleitung der Bilddaten eine Signalverstärkung erfolgen, damit die Bilddaten die übergeordnete zentrale Steuerungseinheit in ausreichender Stärke bzw. Qualität erreichen können.

Da über die zweite Datenleitung B₁₀, B₁₁, B₁₂, B₁₃, B₁₆, B₁₇, B₁₉ ebenso Daten in der umgekehrten Richtung von der übergeordneten zentralen Steuerungseinheit bis zur Steuerungseinheit 19b der Bildverarbeitungseinheit 19 übertragen werden können, sind die entsprechenden Anschlüsse der Steuerungseinheiten 10b, 11b, 12b, 16b, 17b, 19b der Basis 10, der Antriebseinheiten 11-16, des Verbindungselements 17 sowie der Bilderfassungseinheit 19 einheitlich mit den entsprechenden Anschlüssen der ersten Datenleitung A₁₀, A₁₁, A₁₂, A₁₃, A₁₆, A₁₇ als Eingangsanschlüsse bzw. als Ausgangsanschlüsse bezeichnet.

Das Kabel C₁₆ der Versorgungsleitung C₁₀, C₁₁, C₁₂, C₁₃, C₁₆, C₁₇, C₁₉ ist elektrisch leitend mit einem Versorgungsleitungseingangsanschluss 17w der Steuerungseinheit 17b des Verbindungselements 17 verbunden, wodurch auch die Steuerungseinheit 17b des Verbindungselements 17 elektrisch versorgt werden kann. Diese elektrische Versorgung kann direkt zum Betrieb des Endeffektors 18 verwendet werden.

Die Steuerungseinheit 17b des Verbindungselements 17 weist ferner einen Spannungswandler (nicht dargestellt) auf, welcher die elektrische Spannung direkt von dem Kabel C₁₇ der Versorgungsleitung C₁₀, C₁₁, C₁₂, C₁₃, C₁₆, C₁₇, C₁₉ erhält und diese elektrische Spannung in eine zweite, geringere elektrische Spannung gewandelt. Die zweite, geringere elektrische Spannung wird dann über einen Versorgungsleitungsausgangsanschluss 17z der Steuerungseinheit 17b des Verbindungselements 17 über ein Kabel C₁₉ der Versorgungsleitung C₁₀, C₁₁, C₁₂, C₁₃, C₁₆, C₁₇, C₁₉ an einen Versorgungsleitungseingangsanschluss 19w der Steuerungseinheit 19b der Bildverarbeitungseinheit 19 geleitet, sodass die Steuerungseinheit 19b der Bildverarbeitungseinheit 19 mit der zweiten, geringeren elektrischen Spannung versorgt und betrieben werden kann. Auf diese Art und Weise kann aufgrund der kurzen Strecke zwischen dem Spannungswandler der Bildverarbeitungseinheit 19 dessen Steuerungseinheit 19b eine stabile elektrische Spannung in der passenden Spannungshöhe zur Verfügung gestellt werden. Hierdurch können Probleme bei der stabilen Spannungsübertragung zum Beispiel von der übergeordneten zentralen Steuerungseinheit vermieden werden.

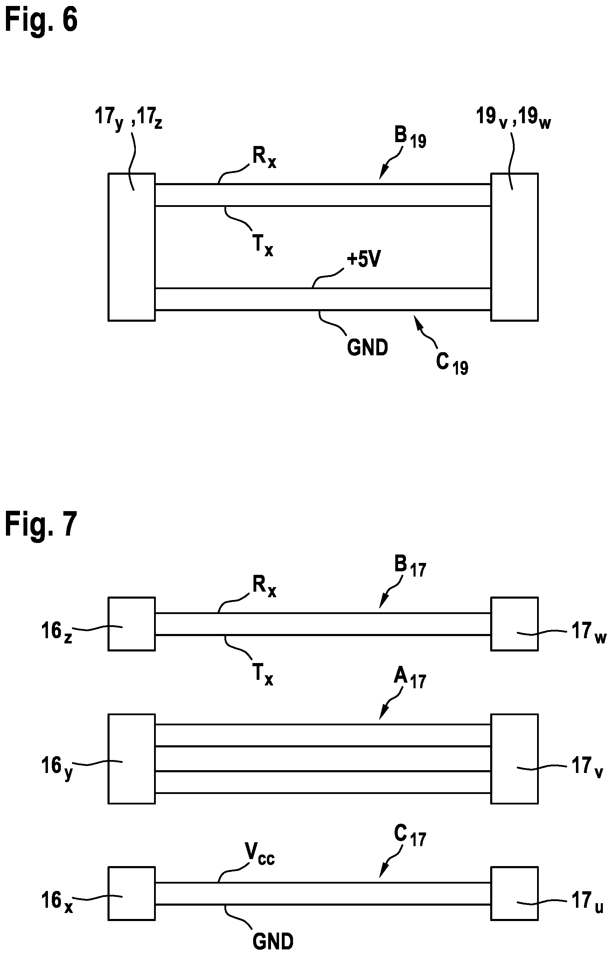

Die Figur 6 zeigt eine schematische Darstellung des Kabels B₁₉ der zweiten Datenleitung B₁₀, B₁₁, B₁₂, B₁₃, B₁₆, B₁₇, B₁₉ und des Kabels C₁₉ der Versorgungsleitung C₁₀, C₁₁, C₁₂, C₁₃, C₁₆, C₁₇, C₁₉ des Verbindungselements 17. Das Kabel B₁₉ der zweiten Datenleitung B₁₀, B₁₁, B₁₂, B₁₃, B₁₆, B₁₇, B₁₉ besteht aus zwei Adern Rₓ, Tₓ bzw. zwei Leitern Rₓ, Tₓ mit einer empfangenen Datenleitung Rₓ und einer übertragenden Datenleitung Tₓ, über welche die Bilddaten der Steuerungseinheit 19b der Bilderfassungseinheit 19 wie zuvor beschrieben an die Steuerungseinheit 17b des Verbindungselements 17 geleitet werden können.

Über eine Masse-Leitung GND und über eine 5V-Spannungsleitung +5V des parallel verlaufenden Kabels C₁₉ der Versorgungsleitung C₁₀, C₁₁, C₁₂, C₁₃, C₁₆, C₁₇, C₁₉ des Verbindungselements 17 kann die zweite, geringere elektrische Spannung der Steuerungseinheit 17b des Verbindungselements 17 der Steuerungseinheit 19b der Bilderfassungseinheit 19 zugeführt werden.

Figur 7 zeigt eine schematische Darstellung der Kabel der ersten Datenleitung A₁₀, A₁₁, A₁₂, A₁₃, A₁₆, A₁₇, der zweiten Datenleitung B₁₀, B₁₁, B₁₂, B₁₃, B₁₆, B₁₇, B₁₉ und der Versorgungsleitung C₁₀, C₁₁, C₁₂, C₁₃, C₁₆, C₁₇, C₁₉ der sechsten Antriebseinheiten 16. Die Kabel der ersten Datenleitung A₁₀, A₁₁, A₁₂, A₁₃, A₁₆, A₁₇, der zweiten Datenleitung B₁₀, B₁₁, B₁₂, B₁₃, B₁₆, B₁₇, B₁₉ und der Versorgungsleitung C₁₀, C₁₁, C₁₂, C₁₃, C₁₆, C₁₇, C₁₉ der übrigen Antriebseinheiten 11-15 sowie der Basis 10 sind identisch aufgebaut.

Die zwei Adern Rₓ, Tₓ bzw. zwei Leitern Rₓ, Tₓ des Kabels B₁₇ der zweiten Datenleitung B₁₀, B₁₁, B₁₂, B₁₃, B₁₃, B₁₆, B₁₇, B₁₉ setzen sich von der Steuerungseinheit 17b des Verbindungselements 17 bis zur Basis 10 sowie darüber hinaus zu übergeordneten zentralen Steuerungseinheit fort. Auch das Kabel der Versorgungsleitung C₁₀, C₁₁, C₁₂, C₁₃, C₁₆, C₁₇, C₁₉ setzt sich von der Steuerungseinheit 17b des Verbindungselements 17 bis zur Basis 10 sowie darüber hinaus zu übergeordneten zentralen Steuerungseinheit fort, wobei nun eine 12V-Spannungsleitung V_{CC} verläuft.

Zusätzlich laufen die Kabel der ersten Datenleitung A₁₀, A₁₁, A₁₂, A₁₃, A₁₆, A₁₇ von der Steuerungseinheit 17b des Verbindungselements 17 bis zur Basis 10 sowie darüber hinaus zu übergeordneten zentralen Steuerungseinheit, welche jeweils vier Adern bzw. Leiter aufweisen, welche zur Umsetzung der Signalübertragung eines Busses erforderlich sind.

### BEZUGSZEICHENLISTE (Teil der Beschreibung)

- A₁₀: erste Datenleitung bzw. Bus der Basis 10bzw. deren Kabel
- A₁₁: erste Datenleitung bzw. Bus der ersten Antriebseinheit 11 bzw. deren Kabel
- A₁₂: erste Datenleitung bzw. Bus der zweiten Antriebseinheit 12 bzw. deren Kabel
- A₁₃: erste Datenleitung bzw. Bus der dritten Antriebseinheit 13 bzw. deren Kabel
- A₁₆: erste Datenleitung bzw. Bus der sechsten Antriebseinheit 16 bzw. deren Kabel
- A₁₇: erste Datenleitung bzw. Bus des Verbindungselements 17 bzw. deren Kabel

- B₁₀: zweite Datenleitung bzw. USB-Leitung der Basis 10bzw. deren Kabel
- B₁₁: zweite Datenleitung bzw. USB-Leitung der ersten Antriebseinheit 11 bzw. deren Kabel
- B₁₂: zweite Datenleitung bzw. USB-Leitung der zweiten Antriebseinheit 12 bzw. deren Kabel
- B₁₃: zweite Datenleitung bzw. USB-Leitung der dritten Antriebseinheit 13 bzw. deren Kabel
- B₁₆: zweite Datenleitung bzw. USB-Leitung der sechsten Antriebseinheit 16 bzw. deren Kabel
- B₁₇: zweite Datenleitung bzw. USB-Leitung des Verbindungselements 17 bzw. deren Kabel
- B₁₉: zweite Datenleitung bzw. USB-Leitung der Datenverarbeitungseinheit 19 bzw. deren Kabel

- C₁₀: Versorgungsleitung der Basis 10bzw. deren Kabel
- C₁₁: Versorgungsleitung der ersten Antriebseinheit 11 bzw. deren Kabel
- C₁₂: Versorgungsleitung der zweiten Antriebseinheit 12 bzw. deren Kabel
- C₁₃: Versorgungsleitung der dritten Antriebseinheit 13 bzw. deren Kabel
- C₁₆: Versorgungsleitung der sechsten Antriebseinheit 16 bzw. deren Kabel
- C₁₇: Versorgungsleitung des Verbindungselements 17 bzw. deren Kabel
- C₁₉: Versorgungsleitung der Datenverarbeitungseinheit 19 bzw. deren Kabel

- GND: Masse-Leitung; Bezugspotential-Leitung
- +5V: 5V-Spannungsleitung
- V_{CC}: 12V-Spannungsleitung
- Rx: empfangende Datenleitung
- Tx: übertragende Datenleitung

- V₁₁-V₁₆: Rotationsachsen der Antriebseinheiten 11-16
- U: Rotations- bzw. Umdrehungsrichtungen der Rotationsachsen V₁₁-V₁₆

- X: Längsrichtung; Tiefe; Länge
- Y: Querrichtung; Breite
- Z: vertikale Richtung; Höhe
- X, Y: Horizontale; horizontale Ebene

- 1: mehrgliedrige aktuierte Kinematik; (Knickarm-)Roboter
- 10: Basis
- 10a: Gehäuse der Basis 10
- 10b: Steuerungseinheit der Basis 10
- 10u: erster Datenleitungseingangsanschluss der Steuerungseinheit 10b der Basis 10
- 10v: zweiter Datenleitungseingangsanschluss der Steuerungseinheit 10b der Basis 10
- 10w: Versorgungsleitungseingangsanschluss der Steuerungseinheit 10b der Basis 10
- 10x: erster Datenleitungsausgangsanschluss der Steuerungseinheit 10b der Basis 10
- 10y: zweiter Datenleitungsausgangsanschluss der Steuerungseinheit 10b der Basis 10
- 10z: Versorgungsleitungsausgangsanschluss der Steuerungseinheit 10b der Basis 10
- 11: erste Antriebseinheit
- 11a: Gehäuse der ersten Antriebseinheit 11
- 11b: Steuerungseinheit der ersten Antriebseinheit 11
- 11c: Antrieb der ersten Antriebseinheit 11
- 11d: Hohlwelle des Antriebs 11c der ersten Antriebseinheit 11
- 11e: Schirmung der ersten Antriebseinheit 11
- 11u: erster Datenleitungseingangsanschluss der Steuerungseinheit 11b der ersten Antriebseinheit 11
- 11v: zweiter Datenleitungseingangsanschluss der Steuerungseinheit 11b der ersten Antriebseinheit 11
- 11w: Versorgungsleitungseingangsanschluss der Steuerungseinheit 11b der ersten Antriebseinheit 11
- 11x: erster Datenleitungsausgangsanschluss der Steuerungseinheit 11b der ersten Antriebseinheit 11
- 11y: zweiter Datenleitungsausgangsanschluss der Steuerungseinheit 11b der ersten Antriebseinheit 11
- 11z: Versorgungsleitungsausgangsanschluss der Steuerungseinheit 11b der ersten Antriebseinheit 11
- 12: zweite Antriebseinheit
- 12a: Gehäuse der zweiten Antriebseinheit 12
- 12b: Steuerungseinheit der zweiten Antriebseinheit 12
- 12c: Antrieb der zweiten Antriebseinheit 12
- 12d: Hohlwelle des Antriebs 12c der zweiten Antriebseinheit 12
- 12e: Schirmung der zweiten Antriebseinheit 12
- 12u: erster Datenleitungseingangsanschluss der Steuerungseinheit 12b der zweiten Antriebseinheit 12
- 12v: zweiter Datenleitungseingangsanschluss der Steuerungseinheit 12b der zweiten Antriebseinheit 12
- 12w: Versorgungsleitungseingangsanschluss der Steuerungseinheit 12b der zweiten Antriebseinheit 12
- 12x: erster Datenleitungsausgangsanschluss der Steuerungseinheit 12b der zweiten Antriebseinheit 12
- 12y: zweiter Datenleitungsausgangsanschluss der Steuerungseinheit 12b der zweiten Antriebseinheit 12
- 12z: Versorgungsleitungsausgangsanschluss der Steuerungseinheit 12b der zweiten Antriebseinheit 12
- 13: dritte Antriebseinheit
- 14: vierte Antriebseinheit
- 15: fünfte Antriebseinheit
- 15a: Gehäuse der fünften Antriebseinheit 15
- 16: sechste Antriebseinheit
- 16a: Gehäuse der sechsten Antriebseinheit 16
- 16b: Steuerungseinheit der sechsten Antriebseinheit 16
- 16c: Antrieb der sechsten Antriebseinheit 16
- 16d: Hohlwelle des Antriebs 16c der sechsten Antriebseinheit 16
- 16e: Schirmung der sechsten Antriebseinheit 16
- 16u: erster Datenleitungseingangsanschluss der Steuerungseinheit 16b der sechsten Antriebseinheit 16
- 16v: zweiter Datenleitungseingangsanschluss der Steuerungseinheit 16b der sechsten Antriebseinheit 16
- 16w: Versorgungsleitungseingangsanschluss der Steuerungseinheit 16b der sechsten Antriebseinheit 16
- 16x: erster Datenleitungsausgangsanschluss der Steuerungseinheit 16b der sechsten Antriebseinheit 16
- 16y: zweiter Datenleitungsausgangsanschluss der Steuerungseinheit 16b der sechsten Antriebseinheit 16
- 16z: Versorgungsleitungsausgangsanschluss der Steuerungseinheit 16b der sechsten Antriebseinheit 16
- 17, 18: Endeffektoreinheit
- 17: Verbindungselement; Medienflansch; Endeffektorflansch; Werkzeugflansch; Greiferflansch
- 17a: Gehäuse des Verbindungselements 17
- 17b: Steuerungseinheit des Verbindungselements 17
- 17c: Endeffektoranschluss des Verbindungselements 17
- 17u: erster Datenleitungseingangsanschluss der Steuerungseinheit 17b des Verbindungselements 17
- 17v: zweiter Datenleitungseingangsanschluss der Steuerungseinheit 17b des Verbindungselements 17
- 17w: Versorgungsleitungseingangsanschluss der Steuerungseinheit 17b des Verbindungselements 17
- 17y: zweiter Datenleitungsausgangsanschluss der Steuerungseinheit 17b des Verbindungselements 17
- 17z: Versorgungsleitungsausgangsanschluss der Steuerungseinheit 17b des Verbindungselements 17
- 18: Endeffektor; Greifer
- 19: Datenverarbeitungseinheit; Bilderfassungseinheit; Kamera
- 19a: Gehäuse der Datenverarbeitungseinheit 19
- 19b: Steuerungseinheit der Datenverarbeitungseinheit 19
- 19c: Bilderfassungssensor der Datenverarbeitungseinheit 19
- 19d: Optik bzw. Linse der Datenverarbeitungseinheit 19
- 19v: zweiter Datenleitungseingangsanschluss der Steuerungseinheit 19b der Datenverarbeitungseinheit 19
- 19w: Versorgungsleitungseingangsanschluss der Steuerungseinheit 19b der Datenverarbeitungseinheit 19

- 2: Untergrund
- 20: Untergrundfläche

## Patentansprüche

1. Mehrgliedrige aktuierte Kinematik (1) in Form eines Roboters
mit einer Mehrzahl von Antriebseinheiten (11-16), welche als serielle kinematische Kette miteinander verbunden sind,
wobei die Antriebseinheiten (11-16) jeweils eine Steuerungseinheit (11b, 12b, 16b) aufweisen, welche ausgebildet sind, wenigstens einen Antrieb (11c, 12c, 16c) der Antriebseinheit (11-16) zur Durchführung der Bewegung der Antriebseinheit (11-16) zu betreiben,
wobei die Steuerungseinheiten (11b, 12b, 16b) der Antriebseinheiten (11-16) untereinander durch eine erste Datenleitung (A₁₀, A₁₁, A₁₂, A₁₃, A₁₆, A₁₇) signalübertragend verbunden und ausgebildet sind, über die erste Datenleitung (A₁₀, A₁₁, A₁₂, A₁₃, A₁₆, A₁₇) wenigstens Daten zum Betreiben des Antriebs (11c, 12c, 16c) zu erhalten,
wobei die Steuerungseinheiten (11b, 12b, 16b) der Antriebseinheiten (11-16) ferner untereinander durch eine zweite Datenleitung (B₁₀, B₁₁, B₁₂, B₁₃, B₁₆, B₁₇, B₁₉) signalübertragend verbunden und ausgebildet sind, die Daten der zweiten Datenleitung (B₁₀, B₁₁, B₁₂, B₁₃, B₁₆, B₁₇, B₁₉) weiterzuleiten,
die mehrgliedrige aktuierte Kinematik (1) aufweisend eine Endeffektoreinheit (17, 18) mit einem Endeffektor (18) und mit einem Verbindungselement (17), welches mit einer endseitigen Antriebseinheit (16) der seriellen kinematischen Kette der Antriebseinheiten (11-16) verbunden ist,
**dadurch gekennzeichnet, dass**
das Kabel der zweiten Datenleitung aus zwei Adern mit einer empfangenden Datenleitung und einer übertragenden Datenleitung besteht,
das Verbindungselement (17) wenigstens eine Datenverarbeitungseinheit (19), nämlich eine Bilderfassungseinheit, und eine Steuerungseinheit (17b) aufweist,
die Steuerungseinheit (17b) des Verbindungselements (17) ausgebildet ist, wenigstens die Datenverarbeitungseinheit (19) zu betreiben,
die Steuerungseinheit (17b) des Verbindungselements (17) mit der ersten Datenleitung (A₁₀, A₁₁, A₁₂, A₁₃, A₁₆, A₁₇) signalübertragend verbunden und ausgebildet ist, über die erste Datenleitung (A₁₀, A₁₁, A₁₂, A₁₃, A₁₆, A₁₇) wenigstens Daten zum Betreiben der Datenverarbeitungseinheit (19) zu erhalten und
die Steuerungseinheit (17b) des Verbindungselements (17) ferner mit der zweiten Datenleitung (B₁₀, B₁₁, B₁₂, B₁₃, B₁₆, B₁₇, B₁₉) signalübertragend verbunden und ausgebildet ist, die Daten der Datenverarbeitungseinheit (19) über die zweite Datenleitung (B₁₀, B₁₁, B₁₂, B₁₃, B₁₆, B₁₇, B₁₉) weiterzuleiten.

2. Mehrgliedrige aktuierte Kinematik (1) nach Anspruch 1, **dadurch gekennzeichnet, dass**
die erste Datenleitung (A₁₀, A₁₁, A₁₂, A₁₃, A₁₆, A₁₇) zwischen zwei unmittelbar benachbarten Steuerungseinheiten (11b, 12b, 16b) der Antriebseinheiten (11-16) durch wenigstens ein Kabel (A₁₀; A₁₁; A₁₂; A₁₃; A₁₆; A₁₇) gebildet wird,
die zweite Datenleitung (B₁₀, B₁₁, B₁₂, B₁₃, B₁₆, B₁₇, B₁₉) zwischen zwei unmittelbar benachbarten Steuerungseinheiten (11b, 12b, 16b) der Antriebseinheiten (11-16) durch wenigstens ein Kabel (B₁₀, B₁₁, B₁₂, B₁₃, B₁₆, B₁₇, B₁₉) gebildet wird und
das Kabel (A₁₀; A₁₁; A₁₂; A₁₃; A₁₆; A₁₇) der ersten Datenleitung (A₁₀, A₁₁, A₁₂, A₁₃, A₁₇, A₁₇) und das Kabel (B₁₀, B₁₁, B₁₂, B₁₃, B₁₆, B₁₇, B₁₉) der zweiten Datenleitung (B₁₀, B₁₁, B₁₂, B₁₃, B₁₆, B₁₇, B₁₉) zumindest abschnittsweise von einer gemeinsamen Schirmung (11e, 12e, 16e) umgeben werden.

3. Mehrgliedrige aktuierte Kinematik (1) nach einem der Ansprüche 1 oder 2, **dadurch gekennzeichnet, dass**
die Steuerungseinheiten (11b, 12b, 16b) der Antriebseinheiten (11-16) ferner untereinander durch eine Versorgungsleitung (C₁₀, C₁₁, C₁₂, C₁₃, C₁₆, C₁₇, C₁₉) elektrisch energieübertragend verbunden und ausgebildet sind, die erhaltene elektrische Energie sowohl wenigstens zum Betreiben des Antriebs (11c, 12c, 16c) zu erhalten als auch die erhaltene elektrische Energie weiterzuleiten.

4. Mehrgliedrige aktuierte Kinematik (1) nach Anspruch 3,
**dadurch gekennzeichnet, dass**
die Steuerungseinheit (17b) des Verbindungselements (17) mit der Versorgungsleitung (C₁₀, C₁₁, C₁₂, C₁₃, C₁₆, C₁₇, C₁₉) elektrisch energieübertragend verbunden und ausgebildet ist, die erhaltene elektrische Energie wenigstens zum Betreiben des Endeffektors (18) und zum Betreiben der Datenverarbeitungseinheit (19) zu erhalten.

5. Mehrgliedrige aktuierte Kinematik (1) nach Anspruch 3,
**dadurch gekennzeichnet, dass**
die Steuerungseinheit (17b) des Verbindungselements (17) ausgebildet ist, die elektrische Energie der Versorgungsleitung (C₁₀, C₁₁, C₁₂, C₁₃, C₁₆, C₁₇, C₁₉) mit einer ersten Spannung zu erhalten und hieraus eine elektrische Energie einer zweiten, vorzugsweise geringeren, Spannung zu erzeugen, wobei die Steuerungseinheit (17b) des Verbindungselements (17) ferner ausgebildet ist, die Datenverarbeitungseinheit (19) mit der erzeugten zweiten Spannung zu betreiben.

6. Mehrgliedrige aktuierte Kinematik (1) nach einem der vorangehenden Ansprüche, **gekennzeichnet durch**
eine Basis (10), welche dazu ausgebildet ist, auf einem Untergrund (2) feststehend angeordnet zu werden,
wobei die Basis (10) mit einer endseitigen Antriebseinheit (11) der seriellen kinematischen Kette der Antriebseinheiten (11-16) verbunden ist,
wobei eine Steuerungseinheit (10b) der Basis (10) mit der ersten Datenleitung (A₁₀, A₁₁, A₁₂, A₁₃, A₁₆, A₁₇) signalübertragend verbunden und ausgebildet ist, Daten über die erste Datenleitung (A₁₀, A₁₁, A₁₂, A₁₃, A₁₆, A₁₇) weiterzuleiten,
wobei die Steuerungseinheit (10b) der Basis (10) ferner mit der zweiten Datenleitung (B₁₀, B₁₁, B₁₂, B₁₃, B₁₆, B₁₇, B₁₉) signalübertragend verbunden und ausgebildet ist, Daten über die zweite Datenleitung (B₁₀, B₁₁, B₁₂, B₁₃, B₁₆, B₁₇, B₁₉) weiterzuleiten.

7. Mehrgliedrige aktuierte Kinematik (1) nach Anspruch 6,
**dadurch gekennzeichnet, dass**
die Steuerungseinheit (10b) der Basis (10) ausgebildet ist, Daten über die zweite Datenleitung (B₁₀, B₁₁, B₁₂, B₁₃, B₁₆, B₁₇, B₁₉), vorzugsweise von der Datenverarbeitungseinheit (19), zu erhalten und signalverstärkt über die zweite Datenleitung (B₁₀, B₁₁, B₁₂, B₁₃, B₁₆, B₁₇, B₁₉), vorzugsweise nach außerhalb, weiterzuleiten.

8. Mehrgliedrige aktuierte Kinematik (1) nach einem der vorangehenden Ansprüche, **dadurch gekennzeichnet, dass**
die Antriebseinheiten (11-16) jeweils eine Hohlwelle (11d, 12d, 16d) aufweisen und
genau die erste Datenleitung (A₁₀, A₁₁, A₁₂, A₁₃, A₁₆, A₁₇) und die zweite Datenleitung (B₁₀, B₁₁, B₁₂, B₁₃, B₁₆, B₁₇, B₁₉), vorzugsweise und die Versorgungsleitung (C₁₀, C₁₁, C₁₂, C₁₃, C₁₆, C₁₇, C₁₉), durch die Hohlwelle (11d, 12d, 16d) hindurch verlaufen.

9. Mehrgliedrige aktuierte Kinematik (1) nach einem der vorangehenden Ansprüche, **dadurch gekennzeichnet, dass**
die mehrgliedrige aktuierte Kinematik (1) vorzugsweise ein Knickarmroboter (1), ist.

10. Mehrgliedrige aktuierte Kinematik (1) nach einem der vorangehenden Ansprüche, **dadurch gekennzeichnet, dass**
die erste Datenleitung (A₁₀, A₁₁, A₁₂, A₁₃, A₁₆, A₁₇) ein Bus (A₁₀, A₁₁, A₁₂, A₁₃, A₁₆, A₁₇) ist.

11. Mehrgliedrige aktuierte Kinematik (1) nach einem der vorangehenden Ansprüche, **dadurch gekennzeichnet, dass**
die zweite Datenleitung (B₁₀, B₁₁, B₁₂, B₁₃, B₁₆, B₁₇, B₁₉) eine USB-Leitung (B₁₀, B₁₁, B₁₂, B₁₃, B₁₆, B₁₇, B₁₉) ist.

## Claims

1. Multi-limb actuated kinematics (1) in the form of a robot
with a plurality of drive units (11-16) which are connected to one another as a serial kinematic chain,
wherein the drive units (11-16) each have a control unit (11b, 12b, 16b) which is designed to operate at least one drive (11c, 12c, 16c) of the drive unit (11-16) to carry out the movement of the drive unit (11-16),
wherein the control units (11b, 12b, 16b) of the drive units (11-16) are connected to one another by a first data line (A₁₀, A₁₁, A₁₂, A₁₃, A₁₆, A₁₇) in a signal-transmitting manner and are designed to receive at least data for operating the drive (11c, 12c, 16c) via the first data line (A₁₀, A₁₁, A₁₂, A₁₃, A₁₆, A₁₇),
wherein the control units (11b, 12b, 16b) of the drive units (11-16) are further connected to one another by a second data line (B₁₀, B₁₁, B₁₂, B₁₃, B₁₆, B₁₇, B₁₉) in a signal-transmitting manner and are designed to transmit the data of the second data line (B₁₀, B₁₁, B₁₂, B₁₃, B₁₆, B₁₇, B₁₉),
the multi-link actuated kinematics (1) has an end effector unit (17, 18) with an end effector (18) and with a connecting element (17) which is connected to an end drive unit (16) of the serial kinematic chain of drive units (11-16),
**characterized in that**
the cable of the second data line consists of two wires with a receiving data line and a transmitting data line,
the connecting element (17) has at least one data processing unit (19), namely an image recording unit, and a control unit (17b),
the control unit (17b) of the connecting element (17) is designed to operate at least the data processing unit (19),
the control unit (17b) of the connecting element (17) is connected to the first data line (A₁₀, A₁₁, A₁₂, A₁₃, A₁₆, A₁₇) in a signal-transmitting manner and is designed to receive at least data for operating the data processing unit (19) via the first data line (A₁₀, A₁₁, A₁₂, A₁₃, A₁₆, A₁₇) and
the control unit (17b) of the connecting element (17) is further connected to the second data line (B₁₀, B₁₁, B₁₂, B₁₃, B₁₆, B₁₇, B₁₉) in a signal-transmitting manner and is designed to transmit the data of the data processing unit (19) via the second data line (B₁₀, B₁₁, B₁₂, B₁₃, B₁₆, B₁₇, B₁₉).

2. Multi-limb actuated kinematics (1) according to claim 1, **characterized in that**
the first data line (A₁₀, A₁₁, A₁₂, A₁₃, A₁₆, A₁₇) between two immediately adjacent control units (11b, 12b, 16b) of the drive units (11-16) is formed by at least one cable (A₁₀, A₁₁, A₁₂, A₁₃, A₁₆, A₁₇),
the second data line (B₁₀, B₁₁, B₁₂, B₁₃, B₁₆, B₁₇, B₁₉) between two immediately adjacent control units (11b, 12b, 16b) of the drive units (11-16) is formed by at least one cable (B₁₀, B₁₁, B₁₂, B₁₃, B₁₆, B₁₇, B₁₉) and
the cable (A₁₀, A₁₁, A₁₂, A₁₃, A₁₆, A₁₇) of the first data line (A₁₀, A₁₁, A₁₂, A₁₃, A₁₇, A₁₇) and the cable (B₁₀, B₁₁, B₁₂, B₁₃, B₁₆, B₁₇, B₁₉) of the second data line (B₁₀, B₁₁, B₁₂, B₁₃, B₁₆, B₁₇, B₁₉) are surrounded at least in sections by a common shield (11e, 12e, 16e).

3. Multi-limb actuated kinematics (1) according to one of claims 1 or 2, **characterized in that**
the control units (11b, 12b, 16b) of the drive units (11-16) are further connected to one another by a supply line (C₁₀, C₁₁, C₁₂, C₁₃, C₁₆, C₁₇, C₁₉) in an electrically energy-transmitting manner and are designed to receive the received electrical energy both at least for operating the drive (11c, 12c, 16c) and to transmit the received electrical energy.

4. Multi-limb actuated kinematics (1) according to claim 3, **characterized in that** the control unit (17b) of the connecting element (17) is connected to the supply line (C₁₀, C₁₁, C₁₂, C₁₃, C₁₆, C₁₇, C₁₉) in an electrically energy-transmitting manner and is designed to receive the received electrical energy at least for operating the end effector (18) and for operating the data processing unit (19).

5. Multi-limb actuated kinematics (1) according to claim 3, **characterized in that**
the control unit (17b) of the connecting element (17) is designed to receive the electrical energy of the supply line (C₁₀, C₁₁, C₁₂, C₁₃, C₁₆, C₁₇, C₁₉) at a first voltage and to generate therefrom an electrical energy of a second, preferably lower, voltage,
wherein the control unit (17b) of the connecting element (17) is further designed to operate the data processing unit (19) with the generated second voltage.

6. Multi-limb actuated kinematics (1) according to one of the preceding claims, **characterized by**
a base (10) which is designed to be arranged fixedly on a base (2),
wherein the base (10) is connected to an end drive unit (11) of the serial kinematic chain of drive units (11-16),
wherein a control unit (10b) of the base (10) is connected to the first data line (A₁₀, A₁₁, A₁₂, A₁₃, A₁₆, A₁₇) in a signal-transmitting manner and is designed to transmit data via the first data line (A₁₀, A₁₁, A₁₂, A₁₃, A₁₆, A₁₇),
wherein the control unit (10b) of the base (10) is further connected to the second data line (B₁₀, B₁₁, B₁₂, B₁₃, B₁₆, B₁₇, B₁₉) in a signal-transmitting manner and is designed to transmit data via the second data line (B₁₀, B₁₁, B₁₂, B₁₃, B₁₆, B₁₇, B₁₉).

7. Multi-limb actuated kinematics (1) according to claim 6, **characterized in that**
the control unit (10b) of the base (10) is designed to receive data via the second data line (B₁₀, B₁₁, B₁₂, B₁₃, B₁₆, B₁₇, B₁₉), preferably from the data processing unit (19), and to transmit it with signal amplification via the second data line (B₁₀, B₁₁, B₁₂, B₁₃, B₁₆, B₁₇, B₁₉), preferably to the outside.

8. Multi-limb actuated kinematics (1) according to one of the preceding claims, **characterized in that**
the drive units (11-16) each have a hollow shaft (11d, 12d, 16d) and exactly the first data line (A₁₀, A₁₁, A₁₂, A₁₃, A₁₆, A₁₇) and the second data line (B₁₀, B₁₁, B₁₂, B₁₃, B₁₆, B₁₇, B₁₉), and preferably the supply line (C₁₀, C₁₁, C₁₂, C₁₃, C₁₆, C₁₇, C₁₉), run through the hollow shaft (11d, 12d, 16d).

9. Multi-limb actuated kinematics (1) according to one of the preceding claims, **characterized in that**
the multi-unit actuated kinematics (1) is an articulated arm robot (1).

10. Multi-limb actuated kinematics (1) according to one of the preceding claims, **characterized in that**
the first Data line (A₁₀, A₁₁, A₁₂, A₁₃, A₁₆, A₁₇) is a bus (A₁₀, A₁₁, A₁₂, A₁₃, A₁₆, A₁₇).

11. Multi-limb actuated kinematics (1) according to one of the preceding claims, **characterized in that**
the second data line (B₁₀, B₁₁, B₁₂, B₁₃, B₁₆, B₁₇, B₁₉) is a USB line (B₁₀, B₁₁, B₁₂, B₁₃, B₁₆, B₁₇, B₁₉).

## Revendications

1. Cinématique articulée à plusieurs éléments (1) sous la forme d'un robot
avec une pluralité d'unités d'entraînement (11-16) qui sont reliées entre elles sous la forme d'une chaîne cinématique en série,
les unités d'entraînement (11-16) comportant chacune une unité de commande (11b, 12b, 16b) qui est conçue pour actionner au moins un entraînement (11c, 12c, 16c) de l'unité d'entraînement (11-16) afin d'effectuer le mouvement de l'unité d'entraînement (11-16),
les unités de commande (11b, 12b, 16b) des unités d'entraînement (11-16) étant reliées entre elles par une première ligne de données (A₁₀, A₁₁, A₁₂, A₁₃, A₁₆, A₁₇) et sont conçues pour recevoir au moins des données pour actionner l'entraînement (11c, 12c, 16c) via la première ligne de données (A₁₀, A₁₁, A₁₂, A₁₃, A₁₆, A₁₇),
les unités de commande (11b, 12b, 16b) des unités d'entraînement (11-16) étant en outre reliées entre elles par une deuxième ligne de données (B₁₀, B₁₁, B₁₂, B₁₃, B₁₆, B₁₇, B₁₉) et sont conçues pour transmettre les données de la deuxième ligne de données (B₁₀, B₁₁, B₁₂, B₁₃, B₁₆, B₁₇, B₁₉),
la cinématique actionnée à plusieurs éléments (1) comporte une unité d'effecteur terminal (17, 18) avec un effecteur terminal (18) et un élément de liaison (17) qui est relié à une unité d'entraînement terminale (16) de la chaîne cinématique en série des unités d'entraînement (11-16),
**caractérisée en ce que**
le câble de la deuxième ligne de données se compose de deux fils avec une ligne de données réceptrice et une ligne de données émettrice,
l'élément de liaison (17) comporte au moins une unité de traitement de données (19), à savoir une unité de saisie d'images, et une unité de commande (17b),
l'unité de commande (17b) de l'élément de liaison (17) est conçue pour faire fonctionner au moins l'unité de traitement de données (19),
l'unité de commande (17b) de l'élément de connexion (17) est connectée à la première ligne de données (A₁₀, A₁₁, A₁₂, A₁₃, A₁₆, A₁₇) et est conçue pour recevoir, via la première ligne de données (A₁₀, A₁₁, A₁₂, A₁₃, A₁₆, A₁₇), au moins des données pour faire fonctionner l'unité de traitement de données (19) et
l'unité de commande (17b) de l'élément de liaison (17) est en outre reliée à la deuxième ligne de données (B₁₀, B₁₁, B₁₂, B₁₃, B₁₆, B₁₇, B₁₉) et est conçue pour transmettre les données de l'unité de traitement de données (19) via la deuxième ligne de données (B₁₀, B₁₁, B₁₂, B₁₃, B₁₆, B₁₇, B₁₉).

2. Cinématique actionnée à plusieurs éléments (1) selon la revendication 1, **caractérisée en ce que**
la première ligne de données (A₁₀, A₁₁, A₁₂, A₁₃, A₁₆, A₁₇) est formée entre deux unités de commande (11b, 12b, 16b) immédiatement adjacentes des unités d'entraînement (11-16) par au moins un câble (A₁₀, A₁₁, A₁₂, A₁₃, A₁₆, A₁₇),
la deuxième ligne de données (B₁₀, B₁₁, B₁₂, B₁₃, B₁₆, B₁₇, B₁₉) entre deux unités de commande (11b, 12b, 16b) immédiatement adjacentes des unités d'entraînement (11-16) est formée par au moins un câble (B₁₀, B₁₁, B₁₂, B₁₃, B₁₆, B₁₇, B₁₉) et
le câble (A₁₀, A₁₁, A₁₂, A₁₃, A₁₆, A₁₇) de la première ligne de données (A₁₀, A₁₁, A₁₂, A₁₃, A₁₇, A₁₇) et le câble (B₁₀, B₁₁, B₁₂, B₁₃, B₁₆, B₁₇, B₁₉) de la deuxième ligne de données (B₁₀, B₁₁, B₁₂, B₁₃, B₁₆, B₁₇, B₁₉) sont entourés au moins par sections d'un blindage commun (11e, 12e, 16e).

3. Cinématique actionnée à plusieurs éléments (1) selon l'une des revendications 1 ou 2, **caractérisée en ce que**
les unités de commande (11b, 12b, 16b) des unités d'entraînement (11-16) sont en outre reliées entre elles par une ligne d'alimentation (C₁₀, C₁₁, C₁₂, C₁₃, C₁₆, C₁₇, C₁₉) qui sert à la transmission d'énergie électrique et qui est conçue pour recevoir l'énergie électrique obtenue à la fois pour faire fonctionner l'entraînement (11c, 12c, 16c) et pour transmettre l'énergie électrique obtenue.

4. Cinématique actionnée à plusieurs éléments (1) selon la revendication 3, **caractérisée en ce que**
l'unité de commande (17b) de l'élément de liaison (17) est reliée à la ligne d'alimentation (C₁₀, C₁₁, C₁₂, C₁₃, C₁₆, C₁₇, C₁₉) de manière à transmettre l'énergie électrique et conçue pour recevoir l'énergie électrique obtenue au moins pour faire fonctionner l'effecteur terminal (18) et pour faire fonctionner l'unité de traitement de données (19).

5. Cinématique actionnée à plusieurs éléments (1) selon la revendication 3, **caractérisée en ce que**
l'unité de commande (17b) de l'élément de liaison (17) est conçue pour recevoir l'énergie électrique de la ligne d'alimentation (C₁₀, C₁₁, C₁₂, C₁₃, C₁₆, C₁₇, C₁₉) avec une première tension et pour produire à partir de celle-ci une énergie électrique d'une deuxième tension, de préférence plus faible,
l'unité de commande (17b) de l'élément de liaison (17) étant en outre conçue pour faire fonctionner l'unité de traitement de données (19) avec la deuxième tension générée.

6. Cinématique actionnée à plusieurs éléments (1) selon l'une des revendications précédentes, **caractérisée par**
une base (10) qui est conçue pour être disposée de manière fixe sur un support (2), la base (10) étant reliée à une unité d'entraînement d'extrémité (11) de la chaîne cinématique en série des unités d'entraînement (11-16),
une unité de commande (10b) de la base (10) étant reliée à la première ligne de données (A₁₀, A₁₁, A₁₂, A₁₃, A₁₆, A₁₇) pour la transmission de signaux et étant conçue pour transmettre des données via la première ligne de données (A₁₀, A₁₁, A₁₂, A₁₃, A₁₆, A17),
l'unité de commande (10b) de la base (10) étant en outre reliée à la deuxième ligne de données (B₁₀, B₁₁, B₁₂, B₁₃, B₁₆, B₁₇, B₁₉) et est conçue pour transmettre des données via la deuxième ligne de données (B₁₀, B₁₁, B₁₂, B₁₃, B₁₆, B₁₇, B₁₉).

7. Cinématique actionnée à plusieurs éléments (1) selon la revendication 6, **caractérisée en ce que**
l'unité de commande (10b) de la base (10) est conçue pour recevoir des données via la deuxième ligne de données (B₁₀, B₁₁, B₁₂, B₁₃, B₁₆, B₁₇, B₁₉), de préférence depuis l'unité de traitement de données (19), et de les transmettre avec un signal amplifié via la deuxième ligne de données (B₁₀, B₁₁, B₁₂, B₁₃, B₁₆, B₁₇, B₁₉), de préférence vers l'extérieur.

8. Cinématique actionnée à plusieurs éléments (1) selon l'une des revendications précédentes, **caractérisée en ce que**
les unités d'entraînement (11-16) comportent chacune un arbre creux (11d, 12d, 16d) et, de préférence, la première ligne de données (A₁₀, A₁₁, A₁₂, A₁₃, A₁₆, A₁₇) et la deuxième ligne de données (B₁₀, B₁₁, B₁₂, B₁₃, B₁₆, B₁₇, B₁₉), de préférence et la ligne d'alimentation (C₁₀, C₁₁, C₁₂, C₁₃, C₁₆, C₁₇, C₁₉), traversent l'arbre creux (11d, 12d, 16d).

9. Cinématique actionnée à plusieurs éléments (1) selon l'une des revendications précédentes, **caractérisée en ce que**
la cinématique actionnée à plusieurs éléments (1) est un robot à bras articulé (1).

10. Cinématique actionnée à plusieurs éléments (1) selon l'une des revendications précédentes, **caractérisée en ce que**
la première ligne de données (A₁₀, A₁₁, A₁₂, A₁₃, A₁₆, A₁₇) est un bus (A₁₀, A₁₁, A₁₂, A₁₃, A₁₆, A₁₇).

11. Mécanisme cinématique à plusieurs éléments (1) selon l'une des revendications précédentes, **caractérisé en ce que**
la deuxième ligne de données (B₁₀, B₁₁, B₁₂, B₁₃, B₁₆, B₁₇, B₁₉) est une ligne USB (B₁₀, B₁₁, B₁₂, B₁₃, B₁₆, B₁₇, B₁₉).
